# EUROPÄISCHE PATENTSCHRIFT

(11) **EP 2 458 569 B1**
(45) Veröffentlichungstag und Bekanntmachung des Hinweises auf die Patenterteilung: **18.05.2016**
(21) Anmeldenummer: 11190252.4
(22) Anmeldetag: 23.11.2011
(51) Int. Cl.: G07F 7/10

(54) **Datenträgervorrichtung mit eigenem Prozessor zur Ausführung eines Netzzugriffprogramms**
Data carrier device with own processor for carrying out a network access program
Dispositif de support de données doté d'un processeur spécifique pour l'exécution d'un programme d'accès au réseau

(30) Priorität: 24.11.2010 DE 102010060758
(43) Veröffentlichungstag der Anmeldung: 30.05.2012
(73) Patentinhaber: KOBIL Systems GmbH, 67547 Worms (DE)
(72) Erfinder: Tak, Markus, 69488 Birkenau (DE)
(74) Vertreter: Cohausz & Florack

(56) Entgegenhaltungen:
- EP-A1- 1 657 645
- EP-A1- 2 196 935
- US-A1- 2008 126 653
- US-A1- 2008 320 317
- Kobil Systems: "M-Identity - For a maximum protection, and a high level of user-friendliness.", , 2. April 2009 (2009-04-02), XP002670597, Gefunden im Internet: URL:http://www.kobil.com/fileadmin/Documen ts_2009/Products/Infomaterial/migrosbank-s csy_uk.pdf [gefunden am 2012-02-29] & Kobil Systems: "Die nächste Generation des Zahlungsverkehrs", , 10. August 2009 (2009-08-10), Gefunden im Internet: URL:http://www.kobil.com/fileadmin/Documen ts_2009/Products/Infomaterial/commerzbank- scsy_de.pdf [gefunden am 2012-02-29]
- POCKET DESKTOPS: 'How it works', [Online] 16 November 2010, Gefunden im Internet: <URL:http://web.archive.org/web/20101116165 842/http://pocketdesktops.com/index.php?opt ion=com_content&view=article&id=2&Itemid=3> [gefunden am 2013-06-21]
- POCKET DESKTOPS: 'Pocket Desktop OS', [Online] 16 November 2010, Gefunden im Internet: <URL:http://web.archive.org/web/20101116165 905/http://pocketdesktops.com/index.php?opt ion=com_content&view=article&id=3&Itemid=6> [gefunden am 2013-06-21]
- POCKET DESKTOPS: 'Scenarios', [Online] 16 November 2010, Gefunden im Internet: <URL:http://web.archive.org/web/20101116170 105/http://pocketdesktops.com/index.php?opt ion=com_content&view=article&id=8&Itemid=16 > [gefunden am 2013-06-21]
- POCKET DESKTOPS: 'Why Pocket Desktop', [Online] Bd. 1, 16 November 2010, Gefunden im Internet: <URL:http://web.archive.org/web/20101116170 029/http://pocketdesktops.com/index.php?opt ion=com_content&view=article&id=7&Itemid=10 > [gefunden am 2013-06-21]

## Beschreibung

### Gebiet der Erfindung

Die vorliegende Erfindung betrifft unter anderem den gesicherten Zugriff auf Netze, wie z.B. das Internet.

### Hintergrund der Erfindung

Heutzutage wird eine Vielzahl von sicherheitsrelevanten Diensten über das Internet durchgeführt. So ist es beispielsweise bekannt, Bankgeschäfte oder Zahlungen über das Internet durchzuführen. Online-Dienste, wie das Online-Banking oder das Online-Payment, stellen jedoch ein Ziel für Hacker dar, die die sicherheitsrelevanten Daten eines Benutzers auskundschaften und in dessen Namen mit diesen Daten Online-Transaktionen durchführen wollen. Beispielsweise werden die Authentifizierungsdaten des Anwenders mittels verschiedener Techniken, wie Phishing- oder Trojaner-Techniken, entwendet und anschließend zur Zahlung verwendet.

Gemäß dem Stand der Technik werden sicherheitsrelevante Dienste, wie Online-Banking und dergleichen, über Netzzugriffprogramme, wie z.B. herkömmliche Internet-Browser und dergleichen, durchgeführt. Über ein solches Browserprogramm öffnet ein Benutzer beispielsweise eine Internetseite eines Dienstanbieters, z.B. einer Bank. Bevor der Benutzer jedoch eine sicherheitsrelevante Transaktion bzw. einen solchen Dienst, wie eine Überweisung, durchführen kann, authentisiert sich der Benutzer bei der Bank. Hierfür muss der Benutzer beispielsweise den Benutzernamen und ein Passwort eingeben. Der Benutzer überträgt also von seiner Datenverarbeitungsanlage, wie einem Computer, zumindest ein Authentisierungsmerkmal an die Bank, insbesondere an deren Datenverarbeitungsanlage, wie z.B. einem Netzwerkelement und/oder einem Server. Die übertragenen Daten werden mit von der Bank gespeicherten Daten verglichen, und dem Benutzer wird bei einem positiven Vergleichsergebnis die Durchführung des entsprechenden Dienstes erlaubt. Auch kann eine Authentifizierung durch andere kryptographische Operationen, wie z.B. eine Signaturprüfung, durchgeführt werden.

Durch die zuvor genannten Techniken von Hackern, insbesondere durch einen so genannten "man-in-the-browser"-Angriff, ist es jedoch möglich, ein Netzzugriffprogramm, wie z.B. einen Internet-Browser, zu manipulieren. So ist es beispielsweise bei einem manipulierten Internet-Browser möglich, dass ein Benutzer seine Authentisierungsdaten, wie beispielsweise eine persönliche Identifikationsnummer (PIN), ein Passwort, ein Einmal-Passwort wie eine Transaktionsnummer (TAN) oder dergleichen in herkömmlicher Weise eingibt, um den entsprechenden Dienst bzw. die Transaktion, wie eine Überweisung, freizuschalten. Durch die Manipulation des Internet-Browsers wird jedoch der Betrag (oder sogar ein höherer Betrag) nicht an den gewünschten Empfänger, sondern an ein von dem Hacker definiertes Konto überwiesen.

Aus dem Stand der Technik sind zur Verbesserung der diesbezüglichen Sicherheit Verfahren bekannt, bei denen Hardware-Komponenten eingesetzt werden. Beispielsweise werden Verfahren mit Smartcards und Einmal-Passwörtern eingesetzt. Diese Verfahren werden auch 2-Faktor-Authentifizierungs Verfahren (Besitz und Wissen) genannt. Zum einen "weiß" ein Benutzer etwas, z.B. das Passwort, und zum anderen "besitzt" der Benutzer etwas, z.B. die Smartcard, ein USB-Speichergerät, etc.. Diese 2-Faktor-Authentifizierung erhöht zwar die Sicherheit, jedoch sind in letzter Zeit erfolgreiche Angriffe auf diese Authentifizierungstechnik bekannt geworden. Zum Beispiel können Hacker mit Hilfe von Schadprogrammen (sogenannten "Keyloggern") die PIN der Smartcards bzw. Token abhören und dann - in Echtzeit - über ein Netzwerk, wie das Internet, auf die entsprechende Smartcard bzw. den Token am Benutzerrechner zugreifen, solange diese noch physisch zugänglich (gesteckt) sind. Dadurch können die Hacker sowohl "Besitz" (z.B. Kontrolle über die Smartcard) als auch "Wissen" (z.B. der PIN) erlangen bzw. verwenden.

Die Internet-Veröffentlichungen von Kobil Systems "M-Identity - for a maximum protection, and a high level of user-friendliness" vom 2. April 2009 und "Die nächste Generation des Zahlungsverkehrs" vom 10. August 2009 beschreiben einen USB-Stick mit Chipkartenlesegerät und vorkonfiguriertem Browser, der auf dem Prozessor eines mit dem USB-Stick verbundenen Host-PCs läuft.

Die Internet-Veröffentlichung von Heise Open Source "Embedded-Linux-Rechner im USB-Stick-Format" vom 27.8.2007 beschreibt einen USB-Stick mit integriertem ARM-9-Prozessor, SD-RAM, Flash-Rom, Ethernet-Anschluss und USB-Device- und USB-Host-Ports.
Die Internet-Veröffentlichung von Wikipedia "Live System" vom 13.9.2010 beschreibt ein Direktstart oder Live-System als ein Betriebssystem, das ohne Installation und Beeinflussung des Inhalts einer im System vorhandenen Festplatte gestartet werden kann.

### Zusammenfassung einiger beispielhafter Ausgestaltungen der vorliegenden Erfindung

Aufgabe der vorliegenden Erfindung ist es deshalb, die oben genannten Nachteile zu überwinden.

Die Aufgabe wird gelöst durch ein Verfahren gemäß Patentanspruch 1 und eine tragbare Datenträgervorrichtung gemäß Patentanspruch 2. Des Weiteren wird die Aufgabe gelöst durch ein System gemäß Patentanspruch 13 und ein Computerprogramm gemäß Patentanspruch 14.

Vorteilhafte beispielhafte Ausgestaltungen der Erfindung sind den abhängigen Ansprüchen zu entnehmen.

Das erfindungsgemäße Verfahren umfasst das Ausführen eines auf einer tragbaren Datenträgervorrichtung enthaltenen Netzzugriffprogramms auf einem Prozessor der Datenträgervorrichtung und das Verwenden von Mitteln zum Aufnehmen und/oder Ausgeben von Informationen einer mit der Datenträgervorrichtung verbundenen Datenverarbeitungsanlage beim Ausführen des Netzzugriffprogramms.

Die erfindungsgemäße tragbare Datenträgervorrichtung umfasst Mittel zum Ausführen eines auf der Datenträgervorrichtung enthaltenen Netzzugriffprogramms auf einem Prozessor der Datenträgervorrichtung, wobei beim Ausführen des Netzzugriffprogramms Mittel zum Aufnehmen und/oder Ausgeben von Informationen einer mit der Datenträgervorrichtung verbundenen Datenverarbeitungsanlage verwendbar sind.

Ein Netzzugriffprogramm ist z.B. ein Computerprogramm mit Programmanweisungen, wobei die Programmanweisungen einen Prozessor zur Bereitstellung einer Benutzeroberfläche zum Zugriff auf ein Netzwerk und/oder ein Netzwerkelement veranlassen, wenn das Computerprogramm durch den Prozessor ausgeführt wird. Ein Netzwerk ist beispielsweise eine Vielzahl miteinander verbundener Geräte, beispielsweise programmgesteuerter Geräte wie beispielsweise Computer. Das Netzwerk kann beispielsweise ein Intranet, Extranet oder das Internet sein. Ein Netwerkelement ist ein Element des Netzwerks, beispielsweise ein Knoten des Netzwerks. Netzwerkelemente sind beispielsweise Computer, auf die über das Netzwerk zugegriffen werden kann. Ein Beispiel für ein Netzwerkelement ist ein Server. Beispiele für ein Netzzugriffprogramm sind z.B. ein Browserprogramm, wie z.B. Mozilla Firefox, Windows Internet Explorer, Opera, Opera Mini, Safari etc.. Das Netzzugriffprogramm ist beispielsweise in einem nicht-flüchtigen Speicher der Datenträgervorrichtung gespeichert. Zum Beispiel ist das Netzzugriffprogramm als ein Teil der Firmware der Datenträgervorrichtung in einem separaten Firmwarespeicherbereich der Datenträgervorrichtung gespeichert und (z.B. durch den Bediener) vorzugsweise nicht oder nur mit speziellen Mitteln veränderbar und/oder austauschbar. Vorzugsweise sollte ein (entsprechend gesichertes) Update der Firmware möglich sein.

Zum Beispiel ist das Netzzugriffprogramm in einem schreibgeschützten Speicherbereich der Datenträgervorrichtung gespeichert. Unter einem schreibgeschützten Speicherbereich kann beispielsweise ein Speicherbereich verstanden werden, der - beispielsweise nach einer einmaligen Beschreibung mit Daten (beispielsweise bei der Produktion der Datenträgervorrichtung und/oder bei der erstmaligen Aufspielung der Firmware ) - entweder nicht mehr oder nur im Falle einer erfolgreichen Authentifizierung beschreibbar ist. Die Authentifizierung kann beispielsweise durch die Datenträgervorrichtung erfolgen. Zum Beispiel kann zur erfolgreichen Authentifizierung die Eingabe eines Passworts durch einen Benutzer erforderlich sein, zum Beispiel an der Datenträgervorrichtung und/oder an der Datenverarbeitungsanlage. Es ist beispielsweise denkbar, dass nur bestimmte Benutzer Schreibrechte für den schreibgeschützten Speicherbereich besitzen. Zum Beispiel kann die Authentifizierung die Prüfung der Signatur der auf den schreibgeschützten Speicherbereich zu schreibenden Daten umfassen. Zum Beispiel können nur digital signierte Daten auf den schreibgeschützten Speicherbereich geschrieben werden, für die eine Signaturprüfung ergeben hat, dass Sie aus einer vertrauenswürdigen Quelle stammen. Zum Beispiel können nur vom Hersteller der Datenträgervorrichtung digital signierte Daten in den schreibgeschützten Speicherbereich geschrieben werden. Dies ist beispielsweise vorteilhaft, wenn der schreibgeschützte Speicherbereich ein Firmwarespeicherbereich ist, um eine Aktualisierung der Firmware durch den Hersteller der Datenträgervorrichtung zu ermöglichen. Der schreibgeschützte Speicherbereich kann allerdings auch ein Nur-Lese-Speicher sein, der Daten in nicht auslesbarer und nicht veränderbarer Form speichert. Der (beispielsweise schreibgeschützte) Speicherbereich, in dem das Netzzugriffprogramm gespeichert ist, kann beispielsweise ein Firmwarespeicherbereich der Datenträgervorrichtung oder ein Teil dieses Firmwarespeicherbereichs sein, kann aber auch von dem Firmwarespeicherbereich verschieden sein.

Als Firmware bezeichnet wird das Betriebsprogramm bzw. das Betriebssystem der Datenträgervorrichtung. Die Firmware kann beispielsweise zumindest teilweise ein Embedded-Betriebssystem sein, z.B. ein Embedded-Linux-Betriebssystem oder ein Embedded-Windows-Betriebssystem.

Die Datenträgervorrichtung umfasst einen Prozessor, wobei die Datenträgervorrichtung derart eingerichtet ist, dass das Netzzugriffprogramm auf dem Prozessor ausführbar ist. Zum Beispiel umfasst die Datenträgervorrichtung ferner einen Programmspeicher (z.B. mit einem Firmwarespeicherbereich) und einen Hauptspeicher, wobei der Prozessor z.B. Programme ausführt, die im Programmspeicher gespeichert sind, und Zwischenergebnisse oder ähnliches im Hauptspeicher abspeichert.

Ein Programmspeicher ist z.B. ein nicht-flüchtiger Speicher, und ein Hauptspeicher ist z.B. ein flüchtiger- oder nicht-flüchtiger-Speicher, insbesondere ein Speicher mit wahlfreiem-Zugriff (RAM) und/oder ein Flash-Speicher. Nicht-flüchtige Speicher sind z.B. Speicher mit wahlfreiem-Zugriff (RAM) wie z.B. NOR-Flash-Speicher oder mit sequentiellen-Zugriff wie z.B. NAND-Flash-Speicher und/oder Speicher mit Nur-Lese-Zugriff (ROM) wie z.B. löschbare programmierbare ROM(Erasable Programmable ROM, EPROM), elektrisch löschbare programmierbare ROM (Electrically Erasable Programmable ROM, EEPROM), oder ROM. Flüchtige Speicher sind z.B. Speicher mit wahlfreiem Zugriff, wie z.B. dynamic RAM (DRAM) oder static RAM (SRAM).

Unter Prozessor sollen beispielsweise Kontrolleinheiten, Mikroprozessoren, Mikrokontrolleinheiten wie Mikrocontroller, digitale Signalprozessoren (Digital Signal Processor, DSP), Anwendungsspezifische Integrierte Schaltungen (Application Specific Integrated Circuit, ASIC) oder Feld-programmierbare Gatter Anordnungen (Field Programmable Gate Arrays, FPGA) verstanden werden.

Die Datenträgervorrichtung ist tragbar ausgebildet, z.B. in Form eines tragbaren Flashspeichers, einer tragbaren Festplatte, eines Speichersticks (z.B. eines USB-Speichersticks), einer Speicherkarte (z.B. einer Secure Digital (SD) Memory Card, einer microSD Memory Card, einer miniSD Memory Card, einer Embedded MultiMediaCard (eMMC), etc.) und/oder eines Wechseldatenträgers. Vorzugsweise ist tragbar derart zu verstehen, dass die Abmessungen der Datenträgervorrichtung kompakt sind (beispielsweise kleiner oder gleich 8cm*4cm*1,5cm) und/oder deren Gewicht gering ist (vorzugsweise kleiner oder gleich 100g); zum Beispiel weist die Datenträgervorrichtung dieselben oder vergleichbare Abmessungen mit im Stand der Technik bekannten tragbaren Datenträgervorrichtungen auf.

Des Weiteren ist die Datenträgervorrichtung mit einer Datenverarbeitungsanlage verbindbar. Verbindbar soll insbesondere heißen, dass zumindest eine logische Verbindung, insbesondere eine Datenverbindung, zwischen der Datenträgervorrichtung und der Datenverarbeitungsanlage herstellbar ist. Dabei kann die Datenverbindung sowohl drahtlos als auch drahtgebunden sein.

Eine drahtgebundene Datenverbindung zwischen der Datenträgervorrichtung und der Datenverarbeitungsanlage stellt gleichzeitig eine mechanische Verbindung dar, welche z.B. durch das Einstecken einer Datenschnittstelle (z.B. eines Steckers) der Datenträgervorrichtung in eine entsprechende Datenschnittstelle (z.B. eine Buchse) der Datenverarbeitungsanlage herstellbar ist. Eine solche mechanische Verbindung ist vorzugsweise nicht dauerhaft und reversibel, d.h. trennbar (insbesondere zerstörungsfrei trennbar). Beispiele drahtgebundener Datenverbindungen sind eine drahtgebundene serielle Datenverbindung (z.B. eine USB (Universal Serial Bus)-, Firewire-, RS-232-Datenverbindung, etc.), eine drahtgebundene parallele Datenverbindung (z.B. eine SCSI (Small Computer System Interface)-, IEEE (Institute of Electrical and Electronics Engineers)-1284-Datenverbindung, etc.) oder eine drahtgebundene Netzwerk-Datenverbindung (z.B. eine Ethernet-, Fast-Ethernet-, Gigabit-Ethernet-Datenverbindung, etc.). Weitere drahtgebundene Datenverbindungen sind z.B. Steckverbindungen zwischen einer Datenschnittstelle einer Speicherkarte (wie z.B. einer SD Memory Card, einer microSD Memory Card, einer miniSD Memory Card, einer eMMC, etc.) und einer entsprechend ausgebildeten Schnittstelle der Datenverarbeitungsanlage.

Eine drahtlose Datenverbindung zwischen der Datenträgervorrichtung und der Datenverarbeitungsanlage ist z.B. eine Funk-Datenverbindung (z.B. eine WLAN (Wireless Local Area Network)-, Bluetooth-Datenverbindung, etc.) oder eine Infrarot-Datenverbindung (z.B. eine Infrared Data Association IrDA-Datenverbindung, etc.). Grundsätzlich basieren drahtlose Datenverbindungen z.B. auf der Ausbreitung von elektromagnetischen, elektrischen, magnetischen, akustischen und/oder optischen Wellen. Eine drahtlose Datenverbindung setzt keine mechanische Verbindbarkeit der Datenträgervorrichtung mit der Datenverarbeitungsanlage voraus. Es genügt beispielsweise, wenn die Datenträgervorrichtung in die Nähe der Datenverarbeitungsanlage gebracht wird (z.B. in die Reichweite einer Funk-Datenschnittstelle der Datenverarbeitungsanlage).

Unter Verbinden soll folglich in erster Linie das Herstellen einer Datenverbindung verstanden werden. Das Herstellen der Datenverbindung kann beispielsweise das Einrichten einer physikalischen Verbindung umfassen, und/oder das Einrichten einer Verbindung (beispielsweise einer logischen Verbindung), die auf einer (beispielsweise bereits bestehenden) physikalischen Verbindung aufbaut. Bei der Datenverbindung kann es sich um eine direkte oder indirekte (beispielsweise mehrere Einheiten einbeziehende) Verbindung handeln. Das Herstellen der Datenverbindung erfolgt vorzugsweise installationslos, d.h. dass die Datenverarbeitungsanlage beispielsweise keine besondere (z.B. über ihren üblichen und/oder ursprünglichen Funktionsumfang hinausgehende) softwaremäßige Einrichtung benötigt, um sich mit der Datenträgervorrichtung zu verbinden, beispielsweise auch nicht beim ersten Herstellen der Datenverbindung. Zum Beispiel können Informationen zwischen der Datenträgervorrichtung und dem Betriebssystem der Datenverarbeitungsanlage mit Hilfe eines standardmäßig vom Betriebssystem (der Datenverarbeitungsanlage) bereitgestellten Treibers ausgetauscht werden. Standardmäßig werden von einem Windows-Betriebssystem z.B. USB Mass Storage-, CD-ROM-, Bluetooth-, WLAN- und/oder Human Interface Device HID-Treiber bereitgestellt.

Zum Beispiel kann das Betriebssystem einen Speicher oder einen Speicherbereich (z.B. einen öffentlichen Speicherbereich des Programmspeichers) der Datenträgervorrichtung (automatisch) als neues Laufwerk in die Laufwerkstruktur der Datenverarbeitungsanlage einbinden ("mounten"), sobald die Datenträgervorrichtung mit der Datenverarbeitungsanlage verbunden wird.

Die Ausführung des Netzzugriffprogramms kann z.B. automatisch gestartet werden, wenn die Datenträgervorrichtung mit der Datenverarbeitungsanlage verbunden ist oder wird, wobei beim Ausführen des Netzzugriffprogramms Mittel zum Aufnehmen und/oder Ausgeben von Informationen der Datenverarbeitungsanlage verwendbar sind. Zum Beispiel kann die Datenverarbeitungsanlage alle oder zumindest einige der an der Datenverarbeitungsanlage aufgenommenen Informationen, die das Ausführen des Netzzugriffprogramms betreffen, an die Datenträgervorrichtung bzw. deren Prozessor weiterleiten (z.B. über die Datenverbindung); und die Datenträgervorrichtung bzw. deren Prozessor kann z.B. Informationen, die das Ausführen des Netzzugriffprogramms betreffen und ausgegeben werden sollen, an die Datenverarbeitungsanlage weiterleiten, wobei diese Informationen an der Datenverarbeitungsanlage ausgegeben werden. Dieser Informationsaustausch zwischen der Datenverarbeitungsanlage und der Datenträgervorrichtung kann z.B. zumindest teilweise mit Hilfe eines Treibers und/oder eines telnet-, SSH (Secure Shell)-, RDP- (Remote Desktop Protocol), RFB (Remote Framebuffer)-, VNC (Virtual Network Computing)- und/oder ähnlichen Protokolls erfolgen, wodurch die Datenträgervorrichtung z.B. zumindest teilweise durch die Datenverarbeitungsanlage fernsteuerbar ist. Zum Beispiel kann das Netzzugriffprogramm oder ein anderes Programm der Datenträgervorrichtung einen Informationsaustausch mit dem Betriebssystem und/oder einem Hilfsprogramm der Datenverarbeitungsanlage gemäß einem der genannten Protokolle beim Starten initiieren. Dabei ist z.B. denkbar, dass bereits auf der Datenverarbeitungsanlage vorhandene Hilfsprogramme und/oder standardmäßig vom Betriebssystem der Datenverarbeitungsanlage bereitgestellte Funktionen für diesen Informationsaustausch verwendet werden (z.B. ein Browserprogramm, ein Remote Desktop Client-Programm, etc.).

Des Weiteren umfasst die Datenträgervorrichtung z.B. keine eigene Energieversorgung und ist beispielsweise von einer mit ihr verbundenen Datenverarbeitungsanlage mit Energie versorgbar. Die Energieversorgung kann beispielsweise über eine mechanische Verbindung erfolgen, z.B. durch die Bereitstellung einer elektrischen Spannung und/oder eines elektrischen Stroms. Die Energieversorgung kann aber auch drahtlos erfolgen, z.B. durch elektromagnetische, elektrische und/oder magnetische Felder. Selbstverständlich sind auch Ausgestaltungen denkbar, in welchen die Datenträgervorrichtung z.B. eine eigene Energieversorgung (d.h. einen Energiespeicher, vorzugsweise einen elektrischen Energiespeicher) enthält, z.B. eine Batterie, einen Akkumulator, einen Kondensator, eine Spule, eine Brennstoffzelle, etc.

Unter Mittel zum Aufnehmen und/oder Ausgeben von Informationen sollen insbesondere Ein- und/oder Ausgabegeräte verstanden werden, wie z.B. eine Tastatur, eine Maus, eine Anzeigeeinheit (z.B. ein Bildschirm), eine Datenschnittstelle, ein Mikrofon, eine berührungsempfindliche Anzeigeeinheit, ein Lautsprecher, ein biometrischer Sensor (z.B. ein Fingerabdruck- und/oder Irisscanner) und/oder eine Kamera.

Die Datenträgervorrichtung umfasst (z.B. im Gegensatz zu der Datenverarbeitungsanlage) z.B. keine eigenen Ein- und/oder Ausgabegeräte, so dass die Datenträgervorrichtung auf die Verwendung von Mitteln zum Aufnehmen und/oder Ausgeben von Informationen der Datenverarbeitungsanlage beim Ausführen des Netzzugriffprogramms angewiesen ist, insbesondere auf Mittel zum Aufnehmen von Benutzereingaben und/oder Ausgeben von Benutzerinformationen.

Die Datenträgervorrichtung umfasst beispielsweise keine Einheiten, über die ein Benutzer Informationen betreffend das Netzzugriffprogramm eingeben kann (beispielsweise eine Tastatur) und/oder keine Einheiten, über die einem Benutzer Informationen betreffend das Netzzugriffprogramm angezeigt werden können (beispielsweise einen Bildschirm).

Alternativ ist z.B. denkbar, dass die Datenträgervorrichtung nur Ein- und/oder Ausgabegeräte mit einer eingeschränkten Funktionalität (beispielsweise nur Benutzerein- und/oder Benutzerausgabegeräte mit einer eingeschränkten Funktionalität) umfasst, wie z.B. lediglich eine numerische Tastatur, ein Flüssigkristall Display (Liquid Crystal Display, LCD) z.B. mit einer niedrigen Auflösung (z.B. kleiner oder gleich 320*240 Pixel) und/oder bestehend aus einer oder mehreren Sieben- und/oder Vierzehn-Segmentanzeigen und/oder einen Fingerabdruckscanner. Das heißt, z.B. dass das auf dem Prozessor der Datenträgervorrichtung ausgeführte Netzzugriffprogramms mittels dieser Ein- und/oder Ausgabegeräte nicht vollständig, sondern nur eingeschränkt bedienbar ist. Zum Beispiel ist die Benutzeroberfläche des Netzzugriffprogramms nicht oder zumindest nicht vollständig auf einem niedrig auflösenden LCD und/oder einem LCD lediglich bestehend aus Sieben-Segmentanzeigen darstellbar; und/oder sind z.B. sicherheitsrelevante Eingaben (z.B. eine PIN-Eingabe und/oder ein Fingerabdruck-Eingabe) durch ein Eingabegerät mit einer eingeschränkten Funktionalität (z.B. eine numerische Tastatur oder ein Fingerabdruckscanner) aufnehmbar, Texte und/oder andere Bedienereingaben (z.B. Mauseingaben) z.B. zur Navigation innerhalb der Benutzeroberfläche jedoch nicht, so dass die Datenträgervorrichtung auch in diesem Fall auf die Verwendung von Mitteln zum Aufnehmen und/oder Ausgeben von Informationen der Datenverarbeitungsanlage beim Ausführen des Netzzugriffprogramms angewiesen ist. Es kann sich hierbei beispielsweise um Mittel zum Aufnehmen von Benutzereingaben und/oder Ausgeben von Benutzerinformationen handeln. Eine Datenschnittstelle zum Herstellen einer Datenverbindung (z.B. zwischen der Datenträgervorrichtung und der Datenverarbeitungsanlage) stellt vorzugsweise kein Benutzerein- und/oder Benutzerausgabegerät dar.

Die Datenverarbeitungsanlage ist z.B. als Computer, tragbarer Computer (z.B. ein Laptop, Netbook, etc.), als persönlicher digitaler Assistent (PDA), Mobiltelefon, Thinclient, o.ä. ausgebildet.

Das erfindungsgemäße System umfasst eine erfindungsgemäße Datenträgervorrichtung und eine mit der Datenträgervorrichtung verbundene Datenverarbeitungsanlage.

Das erfindungsgemäße Computerprogramm umfasst Programmanweisungen, wobei die Programmanweisungen einen Prozessor zur Ausführung des erfindungsgemäßen Verfahrens veranlassen, wenn das Computerprogramm durch den Prozessor ausgeführt wird. Das Computerprogramm ist z.B. zumindest teilweise als Netzzugriffprogramm ausgebildet und z.B. auf der erfindungsgemäßen Datenträgervorrichtung (z.B. als Firmware) enthalten.

Das Computerprogramm ist beispielsweise über ein Netzwerk wie das Internet, ein Telefon- oder Mobilfunknetzwerk und/oder ein lokales Netzwerk verteilbar. Das Computerprogramm ist z.B. auf bzw. in einem Computerprogramm-Produkt enthalten.

Unter einem Computerprogramm-Produkt wird insbesondere ein computerlesbares Speichermedium verstanden, welches ein Computerprogramm enthält und zum Beispiel als magnetisches, elektrisches, elektro-magnetisches, optisches und/oder andersartiges Speichermedium ausgebildet ist. Ein solches computerlesbares Speichermedium ist beispielsweise tragbar oder in einer Vorrichtung fest installiert. Beispiele für ein solches computerlesbares Speichermedium sind flüchtige oder nicht-flüchtig Speicher mit wahlfreiem-Zugriff (RAM) oder mit Nur-Lese-Zugriff (ROM). Das computerlesbare Speichermedium ist beispielsweise körperlich, d.h. dinghaft. Computerlesbar soll insbesondere so verstanden werden, dass das Speichermedium von einem Computer (aus)gelesen werden kann, beispielsweise von einem Prozessor.

Es ist insbesondere denkbar, dass das erfindungsgemäße Computerprogramm auf Mitteln der erfindungsgemäßen Datenträgervorrichtung, z.B. dessen Prozessor, ausführbar ist bzw. ausgeführt wird.

Im Gegensatz zum Stand der Technik wird das Netzzugriffprogramm gemäß der vorliegenden Erfindung in einer kontrollierten und vorzugsweise unveränderlichen dedizierten Umgebung auf der Datenträgervorrichtung ausgeführt und nicht auf einer allgemeinen Datenverarbeitungsanlage, die auch für andere Anwendungen verwendet wird und anfällig(er) für Ausspähungen und/oder für eine Infektion mit Schadsoftware ist. Ein weiterer Vorteil der vorliegenden Erfindung ist, dass kein (zeitaufwändiger) Neustart und z.B. ein Booten der Datenverarbeitungsanlage von der Datenträgervorrichtung erforderlich sind. Außerdem entfällt ggf. eine aufwändige Konfiguration der Datenverarbeitungsanlage, um das Booten der Datenverarbeitungsanlage von der Datenträgervorrichtung überhaupt erst zu ermöglichen (wie es z.B. bei sogenannten Live-Distributionen erforderlich ist). Vielmehr kann die Datenträgervorrichtung z.B. während sie betrieben wird (d.h. im laufenden Betrieb) für die Inanspruchnahme eines Dienstes, wie einer Online-Überweisung, mit der Datenverarbeitungsanlage verbunden und anschließend entfernt werden, ohne dass der Betrieb der Datenverarbeitungsanlage (z.B. durch ein zeitaufwändiges Neustarten) unterbrochen werden muss.

Grundsätzlich könnten Mittel der Datenträgervorrichtung zum Zugreifen auf ein Netzwerkelement beim Ausführen des Netzzugriffprogramms verwendet werden.
Zum Beispiel könnte die Datenträgervorrichtung Mittel umfassen zum Zugreifen auf ein Netzwerkelement, wie eine Netzwerk-Datenschnittstelle (z.B. eine Ethernet-, Fast-Ethernet-, Gigabit-Ethernet-, DSL (Digital Subscriber Line)- und/oder eine WLAN-Datenschnittstelle) und/oder eine Mobilfunk-Datenschnittstelle (z.B. eine GSM (Global System for Mobile Communications)-, UMTS (Universal Mobile Telecommunications System)-, GPRS (General Packet Radio Service)-, HSDPA (High Speed Downlink Packet Access)-, HSUPA (High Speed Uplink Packet Access)- und/oder eine LTE (Long Term Evolution)-Datenschnittstelle), mit denen eine Datenverbindung z.B. zu einem Netzwerkelement, wie einem Server eines Dienstanbieters (z.B. einer Bank), herstellbar ist und ein Zugriff auf das Netzwerkelement erfolgen kann. Zum Beispiel ist die Datenträgervorrichtung über eine solche Netzwerk- und/oder Mobilfunkdatenschnittstelle mit einem Netz (wie dem Internet oder einem Wide Area Network (WAN)) verbindbar, wobei das Netzwerkelement z.B. ebenfalls mit dem Netz verbunden ist, und folglich die Datenträgervorrichtung über das Netz mit dem Netzwerkelement (zumindest logisch) verbindbar ist.

Dadurch wäre die Datenträgervorrichtung unmittelbar, d.h. ohne Zwischenschaltung/Beteiligung einer Datenverarbeitungsanlage, mit einem Netz bzw. einem Netzwerkelement verbindbar, so dass z.B. ein Ausspähen der an das Netz übertragenen Daten durch auf der Datenverarbeitungsanlage installierte Schadsoftware nicht möglich wäre.

Zum Beispiel könnte zwischen dem Netzwerkelement und der Datenträgervorrichtung eine HTTP (HyperText Transfer Protocol)-, eine HTTPS (HyperText Transfer Protocol Secure)- und/oder eine VPN (Virtual Private Network)-Datenverbindung z.B. durch das Netzzugriffprogramm hergestellt werden. Eine solche Datenverbindung ist z.B. verschlüsselbar und/oder z.B. als sogenannter Tunnel ausbildbar.

Gemäß der Erfindung umfasst das erfindungsgemäße Verfahren das Verwenden eines Mittels (z.B. eines Mittels zum Aufnehmen und/oder Ausgeben von Informationen) der Datenverarbeitungsanlage zum Zugreifen auf ein Netzwerkelement beim Ausführen des Netzzugriffprogramms.

Zum Beispiel kann ein Zugriff erfolgen über eine Datenverbindung zwischen der Datenträgervorrichtung und der Datenverarbeitungsanlage und über Mittel der Datenverarbeitungsanlage zum Zugreifen auf ein Netzwerkelement, wie z.B. eine Netzwerk- und/oder Mobilfunk-Datenschnittstelle der Datenverarbeitungsanlage. Dabei werden die zwischen dem Netzwerkelement und der Datenträgervorrichtung ausgetauschten Daten beispielsweise von der Datenverarbeitungsanlage zumindest inhaltlich unverändert an den jeweiligen Empfänger, das Netzwerkelement oder die Datenträgervorrichtung, weitergeleitet. Die Datenverarbeitungsanlage ist in diesem Fall beispielsweise als sogenannter Proxy-Server und/oder Protokollumsetzer ausgebildet und setzt die Datenverbindung zwischen Datenträgervorrichtung und Netzwerkelement von einer Datenschnittstelle (z.B. einer Netzwerk-Datenschnittstelle) und/oder einem Protokoll auf eine andere Datenschnittstelle (z.B. eine USB-Datenschnittstelle oder eine andere Netzwerk-Datenschnittstelle) und/oder ein anderes Protokoll um.

Zum Beispiel kann zwischen dem Netzwerkelement und der Datenträgervorrichtung eine HTTP-, eine HTTPS- und/oder eine VPN-Datenverbindung z.B. durch das Netzzugriffprogramm hergestellt werden.
Dadurch ist die Datenträgervorrichtung mittelbar, d.h. mit Zwischenschaltung einer Datenverarbeitungsanlage, mit einem Netzwerk bzw. einem Netzwerkelement verbindbar. Ein Ausspähen der an das Netzwerk übertragenen Daten durch auf der Datenverarbeitungsanlage installierte Schadsoftware wird jedoch z.B. durch eine Verschlüsselung der übertragenen Daten verhindert. Außerdem wird z.B. eine Manipulation des Netzzugriffprogramms verhindert.

Gemäß der Erfindung enthält die Datenträgervorrichtung ein Authentisierungsmerkmal, insbesondere ein personenbezogenes Authentisierungsmerkmal, wobei z.B. das Netzzugriffprogramm beim Zugreifen auf das Netzwerkelement mit dem Authentisierungsmerkmal authentifizierbar ist.
Ein Authentisierungsmerkmal, insbesondere in Form von Software, kann beispielsweise ein Passwort, eine digitale Signatur und/oder ein Softwarezertifikat, wie z.B. ein RSA (Rivest Shamir Adleman)-Zertifkat, und dergleichen sein. Das Authentisierungsmerkmal ist beispielsweise in einem Speicher der Datenträgervorrichtung gespeichert oder z.B. in einer mit der Datenträgervorrichtung verbindbaren und von dieser auslesbaren Speichereinheit (z.B. einer Smartcard) enthalten.
Zum Beispiel kann die Datenträgervorrichtung ein Mittel zum Auslesen und/oder zum Freischalten eines in einer Speichereinheit enthaltenen Authentisierungsmerkmals, z.B. einen Smartcard-Leser, umfassen.
Die Smartcard bzw. das Authentisierungsmerkmal ist z.B. austauschbar, so dass die Datenträgervorrichtung durch einen Austausch des Authentisierungsmerkmals z.B. an die Berechtigungen eines neuen Bedieners anpassbar ist. Es versteht sich, dass auch mehrere Authentisierungsmerkmale in Kombination eingesetzt werden können, um die Sicherheit zu erhöhen.
Das Authentisierungsmerkmal ist z.B. personenbezogen und authentifiziert z.B. die Berechtigung einer Person oder einer Gruppe von Personen, auf ein Netzwerkelement zuzugreifen und/oder einen bestimmten Dienst eines Dienstanbieters (z.B. die Durchführung einer Online-Überweisung) in Anspruch zu nehmen, z.B. in Kombination mit einer PIN (2-Faktor-Authentifizierung). Zum Beispiel kann eine Smartcard derart eingerichtet sein, dass Sie das Authentisierungsmerkmal nur dann zum Auslesen freischaltet, wenn der Bediener eine dem Authentisierungsmerkmal zugeordnete PIN eingegeben hat (2-Faktor-Authentisierung), z.B. könnte das Authentisierungsmerkmal verschlüsselt sein und mit der PIN durch Mittel der Smartcard (d.h. innerhalb der Smartcard) entschlüsselbar sein. Die PIN wird beispielsweise von der Datenträgervorrichtung an die Smartcard ausgegeben. Dadurch wird verhindert, dass das Authentisierungsmerkmal ohne Kenntnis der zugehörigen PIN auslesbar ist. In einem solchen Fall wird z.B. nur das Authentisierungsmerkmal zur Authentisierung des Bedieners an das Netzwerkelement übertragen. Durch das Authentisierungsmerkmal kann beispielsweise sichergestellt werden, dass keine unberechtigten Personen Zugriff auf das Netzwerkelement und/oder den Dienst erhalten.

Alternativ oder zusätzlich zu einer PIN können beispielsweise auch biometrische Informationen (z.B. betreffend einen Fingerabdruck, einen Irisscan, einen Gesichtsscan, o.ä.) des Bedieners aufgenommen bzw. durch diesen eingegeben werden, wobei die Smartcard das Authentisierungsmerkmal z.B. nur dann zum Auslesen freischaltet, wenn die aufgenommene biometrische Information eine dem Authentisierungsmerkmal zugeordnete biometrische Information ist (2-Faktor-Authentisierung).

Das Authentisierungsmerkmal kann z.B. auch zur Beglaubigung einzelner Transaktionen verwendet werden, z.B. durch eine entsprechende Ausbildung als digitale Signatur. Zum Beispiel können einzelne Netzzugriffe (z.B. Web Zugriffe) durch das Authentisierungsmerkmal beglaubigt werden, wie z.B. durch eine digitale Signatur über die Daten einer Online-Überweisung.

Ein Zugriff auf das Authentisierungsmerkmal ist z.B. nur von Mitteln innerhalb der Datenträgervorrichtung möglich, so dass das Authentisierungsmerkmal z.B. nicht von einer mit der Datenträgervorrichtung verbundenen Datenverarbeitungsanlage auslesbar ist. Dadurch ist ein Missbrauch z.B. durch einen Hacker im Gegensatz zum Stand der Technik nur möglich, wenn dieser die Datenträgervorrichtung in unmittelbaren Besitz hat (weil ein Zugriff über Schadsoftware auf das Authentisierungsmerkmal über die Datenverarbeitungsanlage ausgeschlossen ist) und die zum Authentisierungsmerkmal der Datenträgervorrichtung gehörende PIN kennt.

Das Authentisierungsmerkmal steht z.B. unter alleiniger Kontrolle der Firmware der Datenträgervorrichtung und/oder des Netzzugriffprogramms. Das heißt, dass beispielsweise nur diese auf das Authentisierungsmerkmal zugreifen können.

In beispielhaften Ausgestaltungen der Erfindung umfasst das erfindungsgemäße Verfahren ferner das Ausführen eines lokalen auf der Datenträgervorrichtung enthaltenen Verbindungsprogramms auf dem Prozessor der Datenträgervorrichtung; und das Herstellen einer Verbindung (z.B. zum Austauschen von Informationen und/oder zum Verwenden/Steuern von Mitteln der Datenverarbeitungsanlage) zwischen dem lokalen Verbindungsprogramm und einem auf einem Prozessor der Datenverarbeitungsanlage ausgeführten externen Verbindungsprogramm. Zum Beispiel enthält die Datenträgervorrichtung ein lokales Verbindungsprogramm, wobei das lokale Verbindungsprogramm auf einem Prozessor der Datenträgervorrichtung ausführbar ist und wobei eine Datenverbindung (z.B. zum Austauschen von Informationen und/oder zum Verwenden von Mitteln der Datenverarbeitungsanlage) herstellbar ist zwischen dem lokalen Verbindungsprogramm und einem auf einem Prozessor der Datenverarbeitungsanlage ausgeführten externen Verbindungsprogramm.

Das lokale Verbindungsprogramm ist z.B. als Teil der Firmware der Datenträgervorrichtung ausgebildet und im Firmwarespeicherbereich der Datenträgervorrichtung gespeichert und wird z.B. zusammen mit dem Netzzugriffprogramm auf dem Prozessor der Datenträgervorrichtung ausgeführt, z.B. sobald die Datenträgervorrichtung mit einer Datenverarbeitungsanlage (mechanisch) verbunden wird.

Das externe Verbindungsprogramm ist z.B. in einem weiteren Speicherbereich der Datenträgervorrichtung gespeichert, wobei dieser Speicherbereich z.B. mit Hilfe eines standardmäßig vom Betriebssystem der Datenverarbeitungsanlage bereitgestellten Treibers (automatisch) als neues Laufwerk in die Laufwerkstruktur der Datenverarbeitungsanlage eingebunden ("gemounted") wird, z.B. wenn die Datenträgervorrichtung mit der Datenverarbeitungsanlage verbunden ist oder wird.

Das externe Verbindungsprogramm wird auf dem Prozessor der Datenverarbeitungsanlage z.B. automatisch ausgeführt, wenn der Speicherbereich als neues Laufwerk in die Laufwerkstruktur der Datenverarbeitungsanlage eingebunden ist oder wird, z.B. durch die Autorun-Funktionalität des Windows-Betriebssystems. Alternativ wird die Ausführung des externen Verbindungsprogramms z.B. von einem Benutzer manuell gestartet.

Das externe Verbindungsprogramm ist z.B. gehärtet. Unter Härten versteht man in der Programmiertechnik beispielsweise, nur derartige (dedizierte) Software einzusetzen, die für den Betrieb des Systems notwendig ist und deren unter Sicherheitsaspekten unbedenklicher Ablauf garantiert werden kann. So können bei einem gehärteten Verbindungsprogramm sämtliche Softwarebestandteile und Funktionen entfernt werden, die zur Erfüllung der vorgesehenen Aufgabe durch das Verbindungsprogramm nicht zwingend notwendig sind. Ferner kann eine Härtungsfunktion Anti-Reverse Engineering, Anti-Debugging und/oder Anti-Code-Injektions-Mechanismen umfassen.

Das lokale Verbindungsprogramm stellt z.B. eine Datenverbindung mit dem externen Verbindungsprogramm her, wobei die Datenverbindung z.B. als Fernsteuerungs-Datenverbindung ausgebildet ist und die Datenträgervorrichtung zumindest teilweise durch die Datenverarbeitungsanlage über diese Verbindung fernsteuerbar ist.

Dadurch wird eine einfache und vorzugsweise installationslose Bedienung des auf der Datenträgervorrichtung ausgeführten Netzzugriffprogramms durch einen Bediener ermöglicht, wobei jedoch gleichzeitig eine Manipulation der Ausführung des Netzzugriffprogramms durch auf der Datenverarbeitungsanlage installierte Schadsoftware verhindert wird, da das Netzzugriffprogramm nicht auf der Datenverarbeitungsanlage ausgeführt wird.

Zum Beispiel ist das lokale Verbindungsprogramm als Konnektor-Programm ausgebildet, das von einem Prozessor der tragbaren Datenträgervorrichtung ausgeführt wird und für die Weiterleitung der Netzwerk- und Grafik-Schnittstellen des Betriebssystems bzw. der Firmware der Datenträgervorrichtung z.B. über eine Verbindung zwischen einer Schnittstelle (z.B. einer Datenschnittstelle) der Datenträgervorrichtung und einer Schnittstelle einer Datenverarbeitungsanlage an die mit der Datenträgervorrichtung verbundenen Datenverarbeitungsanlage sorgt. Dazu können auf der Schnittstelle solche Protokolle benutzt werden, für die jedes Betriebssystem standardmäßig Treiber vorhält, z.B. USB Mass Storage / CD-ROM und/oder HID (Human Interface Device), damit keine Installation von Treibern auf der mit der Datenträgervorrichtung verbundenen Datenverarbeitungsanlage notwendig ist.

Auf der Datenverarbeitungsanlage läuft z.B. ein DVA-Konnektor-Programm als Gegenstück zum auf der Datenträgervorrichtung ablaufenden Konnektor-Programm, wobei das DVA-Konnektor-Programm z.B. die Netzwerk-Zugriffe auf der Schnittstelle von den o.g. Protokollen auf eine Netzwerkschnittstelle der Datenverarbeitungsanlage umsetzt, insbesondere werden z.B. die Netzwerk-Zugriffe des Netzzugriffprogramms über die Datenverarbeitungsanlage und deren Netzwerk-Schnittstellen (etwa DSL, WLAN etc.) in ein Netz, z.B. das Internet, weitergeleitet, etwa an einen Server. Dies kann z.B. eine Proxy-Funktion sein.

Außerdem stellt das DVA-Konnektor Programm z.B. ein Fenster ("Viewer") dar, das die Grafik-Ausgaben des Betriebssystems bzw. der Firmware der Datenträgervorrichtung, insbesondere des Netzzugriffprogramms auf einer Anzeigeeinheit (z.B. einem Bildschirm) der Datenverarbeitungsanlage darstellt und z.B. die Eingaben des Bedieners (insbesondere Mausaktionen, Tastatureingaben) an das Netzzugriffprogramm weiterleitet. Dies kann z.B. mit Hilfe von Remote-Desktop oder VNC Protokollen geschehen.

Das DVA-Konnektor-Programm kann z.B. auf der Datenträgervorrichtung mitgeführt werden (z.B. in einem nicht-flüchtigen Speicher) und von dort der Datenverarbeitungsanlage über eine Schnittstelle bereitgestellt werden, z.B. in Form eines CD-ROM Geräts, von dem die Datenverarbeitungsanlage das DVA-Konnektor-Programm starten kann.

In beispielhaften Ausgestaltungen der Erfindung umfasst das erfindungsgemäße Verfahren ferner das Erhalten von an der Datenverarbeitungsanlage aufgenommenen Informationen an der Datenträgervorrichtung und/oder das Ausgeben von auf der Datenverarbeitungsanlage auszugebenden Informationen an die Datenverarbeitungsanlage.

Gemäß der Erfindung werden an der Datenträgervorrichtung Tastatur- und/oder Mauseingaben über eine (Fernsteuerungs-) Datenverbindung zwischen der Datenträgervorrichtung und der Datenverarbeitungsanlage empfangen, die an der Datenverarbeitungsanlage aufgenommen worden sind und die Ausführung des Netzzugriffprogramms betreffen; und im Gegenzug werden z.B. Bildschirmausgaben z.B. betreffend die Ausführung des Netzzugriffprogramms über die (Fernsteuerungs-) Datenverbindung an die Datenverarbeitungsanlage gesendet und dort auf einer Anzeigeeinheit ausgegeben.

Zum Beispiel können bei der Ausführung eines Programms auf der Datenträgervorrichtung kontinuierlich Bedienereingaben vom externen Verbindungsprogramm an das lokale Verbindungsprogramm als Bedienereingaben für das ausgeführte Programm und Bildschirmausgaben des ausgeführten Programms vom lokalen Verbindungsprogramm an das externe Verbindungsprogramm weitergeleitet werden. Dadurch entsteht beim Bediener der Eindruck, dass das Programm auf der Datenverarbeitungsanlage ausgeführt wird, obwohl es tatsächlich auf der Datenträgervorrichtung ausgeführt wird. Die Weiterleitung der Bedienereingaben und Bildschirmausgaben findet beispielsweise verschlüsselt statt.

Dieser Informationsaustausch zwischen der Datenverarbeitungsanlage und der Datenträgervorrichtung kann z.B. mit Hilfe eines telnet-, SSH-, RFB-, VNC- und/oder eines ähnlichen Protokolls erfolgen, wodurch die Datenträgervorrichtung z.B. zumindest teilweise durch die Datenverarbeitungsanlage fernsteuerbar ist.

Zum Beispiel ist das lokale Verbindungsprogramm als VNC-Server-Programm ausgebildet, und das externe Verbindungsprogramm ist z.B. als VNC-Client-Programm ausgebildet. Sobald das VNC-Server-Programm auf der Datenträgervorrichtung und das VNC-Client-Programm auf der Datenverarbeitungsanlage ausgeführt werden, wird z.B. eine VNC-Datenverbindung (das ist eine Fernsteuerungs-Datenverbindung) zwischen den beiden Verbindungsprogrammen hergestellt. Eine solche VNC-Datenverbindung ermöglicht z.B. die Anzeige von (ggf. dynamischen) Bildschirmausgaben (z.B. Bildschirmausgaben einer Benutzeroberfläche oder von Mauszeigerbewegungen innerhalb der Benutzeroberfläche) von auf der Datenträgervorrichtung ausgeführten Programmen auf der Datenverarbeitungsanlage und z.B. die Berücksichtigung von an der Datenverarbeitungsanlage aufgenommenen Bedienereingaben als Bedienereingabe beim Ausführen von Programmen auf der Datenträgervorrichtung. Zusätzlich können z.B. weitere Ausgaben, wie z.B. Töne, etc., von auf der Datenträgervorrichtung ausgeführten Programmen auf Mitteln der Datenverarbeitungsanlage ausgegeben werden.

Umfasst die Datenträgervorrichtung eine Netzwerk- und/oder Mobilfunktdatenschnittstelle, über die die Datenträgervorrichtung z.B. mit einem Netz verbindbar ist, dann werden beispielsweise nur unmittelbar an der Datenverarbeitungsanlage z.B. von einem Bediener eingegebene Informationen an der Datenträgervorrichtung erhalten und nur unmittelbar an der Datenverarbeitungsanlage z.B. an einen Bediener auszugebende Informationen an die Datenverarbeitungsanlage ausgegeben. Das heißt, das lokale Verbindungsprogramm und das externe Verbindungsprogramm sind z.B. auf die Weiterleitung von Bedienerinformationen (das sind unmittelbar an der Datenverarbeitungsanlage eingegebene und auszugebende Informationen) beschränkt. Insbesondere ist die Datenträgervorrichtung in diesem Fall nicht unter Beteiligung der Datenverarbeitungsanlage z.B. mit einem Netz verbindbar.

In beispielhaften Ausgestaltungen der Erfindung ist das Netzzugriffprogramm gehärtet. Unter Härten versteht man in der Programmiertechnik beispielsweise, nur derartige (dedizierte) Software einzusetzen, die für den Betrieb des Systems notwendig ist und deren unter Sicherheitsaspekten unbedenklicher Ablauf garantiert werden kann. So können bei einem gehärteten Netzzugriffprogramm sämtliche Softwarebestandteile und Funktionen entfernt werden, die zur Erfüllung der vorgesehenen Aufgabe durch das Netzzugriffprogramm nicht zwingend notwendig sind. Des Weiteren wird unter Härten z.B. auch verstanden das Hinzufügen von Überwachungsfunktionen (sogenannter "Watchdog"-Funktionalitäten), Integritätsschutz-Maßnahmen (etwa durch Signaturen), Anti-Debugging-Funktionalitäten (z.B. durch eine Debugger-Erkennung) Anti-Reverse Engineering- und Code Obfuscation-Techniken.

In beispielhaften Ausgestaltungen der Erfindung enthält die Datenträgervorrichtung Konfigurationsinformationen, wobei die Konfigurationsinformationen die Konfiguration des Netzzugriffprogramms beim Ausführen des Netzzugriffprogramms vorgeben. Beispielsweise kann durch die Konfiguration der Zugriff auf ein bestimmtes Netzwerkelement eines Dienstanbieters und/oder das Öffnen einer Internetseite eines Dienstanbieters automatisch beim Start eines als Browserprogramm ausgebildeten Netzzugriffprogramms erfolgen, z.B. kann die Konfiguration eine entsprechende Internet Protocol (IP) Adresse, einen entsprechenden Uniform Resource Locator (URL) und/oder einen entsprechenden Uniform Resource Identifier (URI) enthalten. Ebenfalls können sich darin Informationen befinden, um die Authentizität der aufgerufenen Internetseite zu verifizieren, z.B. ein entsprechendes SSL (Secure Socket Layer)-Serverzertifikat.

In beispielhaften Ausgestaltungen der Erfindung ist die Datenträgervorrichtung als USB-Speichergerät, insbesondere als USB-Speicherstick, mit einem darin enthaltenen Prozessor ausgebildet.

Weitere vorteilhafte beispielhafte Ausgestaltungen der Erfindung sind den abhängigen Ansprüchen und der folgenden detaillierten Beschreibung einiger beispielhafter Ausführungsformen der vorliegenden Erfindung, insbesondere in Verbindung mit den Figuren, zu entnehmen.

### Kurze Beschreibung der Zeichnungen

In den Figuren zeigen
- Fig. 1:: ein Blockdiagramm einer beispielhaften Ausführungsform einer erfindungsgemäßen Datenträgervorrichtung;
- Fig. 2:: ein Blockdiagramm einer beispielhaften Ausführungsform einer Datenverarbeitungsanlage;
- Fig. 3a/b:: jeweils ein Blockdiagramm einer beispielhaften Ausführungsform eines erfindungsgemäßen Systems und eines alternativen Systems;
- Fig. 4:: ein beispielhaftes Ablaufdiagramm mit Schritten, die durchgeführt werden, wenn eine erfindungsgemäße Datenträgervorrichtung mit einer Datenverarbeitungsanlage verbunden wird; und
- Fig. 5:: ein beispielhaftes Ablaufdiagramm mit Schritten, die durchgeführt werden, wenn eine erfindungsgemäße Datenträgervorrichtung mit einer Datenverarbeitungsanage verbunden ist.

### Detaillierte Beschreibung einiger beispielhafter Ausführungsformen der vorliegenden Erfindung

Die vorliegende Erfindung wird im Folgenden anhand von beispielhaften Ausführungsformen beschrieben.

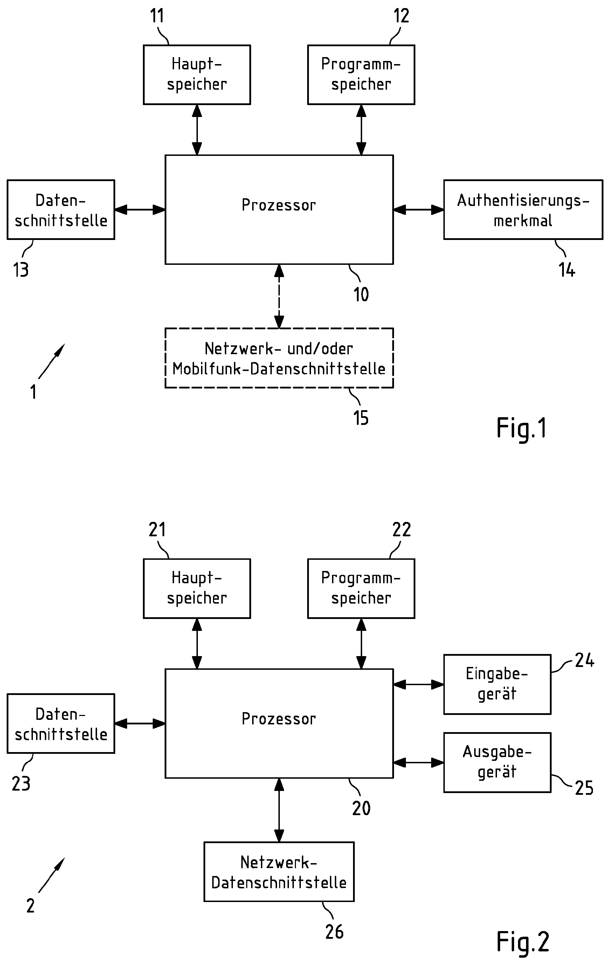

Fig. 1 zeigt ein Blockdiagramm einer beispielhaften Ausführungsform einer erfindungsgemäßen Datenträgervorrichtung 1.

Datenträgervorrichtung 1 weist unter anderem einen Prozessor 10 auf. Prozessor 10 führt zum Beispiel Programmanweisungen aus, die in Programmspeicher 12 gespeichert sind, und speichert beispielsweise Zwischenergebnisse oder ähnliches in Hauptspeicher 11. Zum Beispiel ist Programmspeicher 12 ein nicht-flüchtiger Speicher und Hauptspeicher 11 ist ein flüchtiger- oder nicht-flüchtiger-Speicher.

Vorzugsweise ist Programmspeicher 12 in mehrere Speicherbereiche unterteilt. Zum Beispiel enthält Programmspeicher 12 in einem Firmwarespeicherbereich die Firmware der Datenträgervorrichtung, ein Browserprogramm und ein lokales Verbindungsprogramm sowie optional eine Konfigurationsdatei und in einem öffentlichen Speicherbereich ein externes Verbindungsprogramm. Das Browserprogramm ist vorzugsweise gehärtet und umfasst ausschließlich Funktionen, die zur Ausführung der gewünschten sicherheitsrelevanten Dienste erforderlich sind. Hierdurch lassen sich Angriffe nicht durch andere Prozesse, die bei herkömmlichen Browsern ständig im Hintergrund laufen, verstecken, so dass ein Angriff leichter erkannt wird und entsprechende Gegenmaßnahmen eingeleitet werden können. Ferner kann die Härtungsfunktion Anti-Reverse Engineering, Anti-Debugging und/oder Anti-Code-Injektions-Mechanismen umfassen.

Der Firmwarespeicherbereich ist beispielsweise als schreibgeschützter Speicherbereich und/oder als (unveränderlicher) Nur-Lese-Speicherbereich ausgebildet, wohingegen der öffentliche Speicherbereich beispielsweise als Schreib-Lese-Speicherbereich ausgebildet ist. Schreib- und/oder Lesezugriffe auf den Firmwarespeicherbereich können z.B. nur von Prozessor 10 erfolgen, wohingegen der öffentliche Speicherbereich auch über Datenschnittstelle 13 auslesbar und/oder beschreibbar ist, z.B. von einer mit der Datenträgervorrichtung verbundenen Datenverarbeitungsanlage (siehe Fig. 2). Vorzugsweise ist der öffentliche Speicherbereich nur nach einer vorherigen Authentisierung (z.B. durch eine Signatur) beschreibbar. Die Speicherbereiche können z.B. als physikalisch unterschiedliche Speicher und/oder als unterschiedliche virtuelle Speicher (z.B. unterschiedliche Partitionen) eines physikalischen Speichers ausgebildet sein.

Als Firmware bezeichnet wird das Betriebsprogramm von Datenträgervorrichtung 1, das z.B. Programmanweisungen zur Steuerung der Datenschnittstelle 13, zur Verwaltung des Haupt- und/oder Programmspeichers und zur Ausführung weiterer Programme umfasst, so dass Prozessor 10, wenn er die Firmware ausführt, Datenschnittstelle 13 steuert, den Haupt- und/oder Programmspeicher verwaltet und/oder die Ausführung weiterer Programme startet und/oder überwacht. Die Ausführung der Firmware wird z.B. gestartet, wenn Datenschnittstelle 13 mit einer korrespondierenden Datenschnittstelle einer Datenverarbeitungsanlage (mechanisch) verbunden ist. Die Firmware kann beispielsweise zumindest teilweise ein Embedded-Betriebssystem sein.

Datenschnittstelle 13 ist vorzugsweise als drahtgebundene Datenschnittstelle ausgebildet, insbesondere als USB-Datenschnittstelle. Datenschnittstelle 13 kann aber z.B. auch als drahtlose Datenschnittstelle ausgebildet sein, z.B. als Bluetooth- oder IrDA-Datenschnittstelle.

Eine drahtgebundene Datenverbindung zwischen Datenträgervorrichtung 1 und einer Datenverarbeitungsanlage (siehe Fig. 2) stellt gleichzeitig eine mechanische Verbindung dar, welche z.B. durch das Einstecken von Datenschnittstelle 13 (die z.B. als ein USB-Stecker ausgebildet ist, z.B. als Typ A-, Typ B-, Typ Mini A-, Typ Mini B- oder Typ Micro B-USB-Stecker) in eine korrespondierende Datenschnittstelle (die z.B. als entsprechende USB-Buchse ausgebildet ist) der Datenverarbeitungsanlage herstellbar ist. Über eine drahtgebundene Datenschnittstelle kann außerdem eine Energieversorgung der Datenträgervorrichtung erfolgen, z.B. kann die Datenschnittstelle der Datenverarbeitungsanlage der Datenträgervorrichtung eine elektrische Spannung bereitstellen (z.B. +5V bei einer USB-Datenschnittstelle).

Des Weiteren weist Datenträgervorrichtung 1 ein Authentisierungsmerkmal 14 auf, das z.B. als digitale Signatur ausgebildet ist. Authentisierungsmerkmal 14 ist z.B. auf einer Smartcard gespeichert, die mit der Datenträgervorrichtung 1 verbunden und von Prozessor 10 auslesbar und/oder freischaltbar ist. Das Authentisierungsmerkmal 14 ist z.B. personenbezogen und authentifiziert in Kombination mit einer PIN z.B. die Berechtigung einer einzigen Person, die Dienste einer Bank (z.B. Online-Banking-Dienste) in Anspruch zunehmen. Zum Beispiel ist die Smartcard derart eingerichtet sein, dass Sie das Authentisierungsmerkmal nur dann zum Auslesen freischaltet, wenn der Bediener eine dem Authentisierungsmerkmal zugeordnete PIN eingegeben hat (2-Faktor-Authentisierung), z.B. könnte das Authentisierungsmerkmal verschlüsselt sein und mit der PIN durch Mittel der Smartcard (d.h. innerhalb der Smartcard) entschlüsselbar sein. Die PIN wird beispielsweise von der Datenträgervorrichtung an die Smartcard ausgegeben.
Durch das Authentisierungsmerkmal 14 ist es möglich, ein individuelles und einmaliges Merkmal, welches z.B. nur einer einzigen Person zugeordnet ist, mit der Datenträgervorrichtung zu verknüpfen und die Datenträgervorrichtung dadurch (z.B. für die Nutzung durch nur eine Person) zu individualisieren.

Eine zur erfindungsgemäßen Datenträgervorrichtung 1 alternative Datenträgervorrichtung weist außerdem eine Netzwerk- und/oder Mobilfunk-Datenschnittstelle 15 auf. Zum Beispiel kann die alternative Datenträgervorrichtung mit Hilfe einer solchen Datenschnittstelle eine Datenverbindung (beispielsweise über das Internet) z.B. zu einem Netz und/oder zu einem Server eines der Bank herstellen.

Die erfindungsgemäße Datenträgervorrichtung 1 ist vorzugsweise als USB-Speicherstick ausgebildet, wobei z.B. nur der öffentliche Speicherbereich Teil der USB-Speicherstick Funktionalität von Datenträgervorrichtung 1 ist und von einer mit der Datenträgervorrichtung verbundenen Datenverarbeitungsanlage beschreibbar und/oder auslesbar ist.

Fig. 2 zeigt ein Blockdiagramm einer beispielhaften Ausführungsform einer Datenverarbeitungsanlage 2, die mit der Datenträgervorrichtung 1 der Fig. 1 verbindbar ist. Prozessor 20 führt z.B. Programmanweisungen aus, die in Programmspeicher 22 gespeichert sind, und speichert beispielsweise Zwischenergebnisse oder ähnliches in Hauptspeicher 21. Insbesondere ist in Programmspeicher 22 z.B. das Betriebssystem der Datenverarbeitungsanlage 2 gespeichert.

Prozessor 20 steuert Datenschnittstelle 23, die z.B. zu Datenschnittstelle 13 der Datenträgervorrichtung 1 aus Fig. 1 korrespondiert und vorzugsweise als drahtgebundene Datenschnittstelle ausgebildet ist, insbesondere als USB-Datenschnittstelle, z.B. als USB-Buchse. Datenschnittstelle 23 kann aber z.B. auch als drahtlose Datenschnittstelle ausgebildet sein, z.B. als Bluetooth- oder IrDA-Datenschnittstelle. Insbesondere kann Datenverarbeitungsanlage 2 mit Hilfe einer solchen Datenschnittstelle mit einer korrespondierenden Datenschnittstelle von Datenträgervorrichtung 1 verbunden werden.

Des Weiteren steuert Prozessor 20 eine Netzwerk-Datenschnittstelle 26, zumindest ein Eingabegerät 24 und zumindest ein Ausgabegerät 25. Die Netzwerk-Datenschnittstelle 26 ist z.B. eine Ethernet-, Fast-Ethernet-, Gigabit-Ethernet-, DSL- und/oder eine WLAN-Datenschnittstelle. Zum Beispiel kann Datenverarbeitungsanlage 2 mit Hilfe einer solchen Datenschnittstelle eine Datenverbindung z.B. zu einem Server eines Dienstanbieters (z.B. einer Bank) herstellen.

Eingabegerät 24 ist z.B. ausgebildet als Tastatur, Maus, Mikrofon, berührungsempfindliche Anzeigeeinheit wie z.B. ein Touchscreen, Lautsprecher, biometrischer Sensor wie z.B. ein Fingerabdruck- oder Irisscanner und/oder Kamera. Eingabegerät 24 kann beispielsweise Bedienereingaben aufnehmen und an Prozessor 20 weiterleiten. Ausgabegerät 24 ist z.B. ausgebildet als Anzeigeneinheit wie z.B. ein LCD, ein Plasmabildschirm, ein Dünschicht-Transistor-Bildschirm (Thin Film Transistor Display, TFT Display) und/oder als berührungsempfindliche Anzeigeeinheit wie z.B. ein Touchscreen. Ausgabegerät 25 kann z.B. Informationen für den Bediener von Prozessor 20 empfangen und ausgeben.

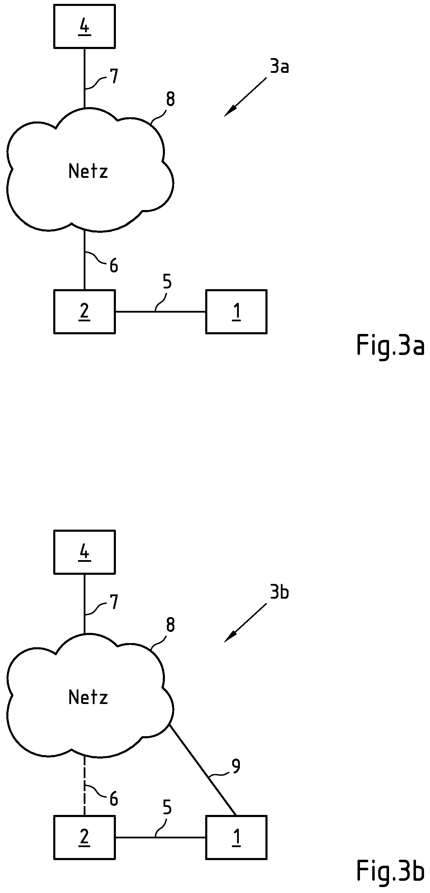

Fig. 3a zeigt ein Blockdiagramm einer beispielhaften Ausführungsform eines erfindungsgemäßen Systems 3a.

System 3a umfasst zumindest eine erfindungsgemäße Datenträgervorrichtung 1 (siehe Fig. 1), eine Datenverarbeitungsanlage 2 (siehe Fig. 2) und einen Server 4. Dabei sind Datenträgervorrichtung 1 und Datenverarbeitungsanlage 2 durch Verbindung 5 miteinander verbunden. Die dargestellte Verbindung 5 ist eine drahtgebundene Datenverbindung, z.B. sind Datenträgervorrichtung 1 und Datenverarbeitungsanlage 2 durch Einstecken von Datenschnittstelle 13 in Datenschnittstelle 23 verbunden.

Des Weiteren sind Datenverarbeitungsanlage 2 bzw. Server 4 durch Verbindung 6 bzw. 7 jeweils mit Netz 8 verbunden. Die dargestellten Verbindungen sind ebenfalls drahtgebundene und/oder zumindest teilweise drahtlose Datenverbindungen und bestehen z.B. zwischen Netzwerk-Datenschnittstelle 26 bzw. einer Datenschnittstelle von Server 4 und dem Netz. Datenverarbeitungsanlage 2 und Server 4 sind folglich über Datenverbindung 6 und 7 sowie Netz 8 miteinander verbindbar und/oder verbunden. Netz 8 ist beispielsweise das Internet und/oder ein Wide Area Network (WAN).

Datenträgervorrichtung 1 ist nicht unmittelbar mit Netz 8 verbunden, so dass keine Datenverbindung zwischen Datenträgervorrichtung 1 und Server 4 ohne Beteiligung von Datenverarbeitungsanlage 2 besteht, allerdings kann Datenverarbeitungsanlage 2 als Protokollumsetzer ausgebildet sein und eine Datenverbindung von Netzwerk-Datenschnittstelle 26 auf Datenschnittstelle 23 umsetzen, so dass Datenträgervorrichtung 1 über Datenverbindung 5 und 6 mit Netz 8 verbindbar ist und somit Datenträgervorrichtung 1 und Server 4 über Datenverbindung 5, 6 und 7 sowie Datenverarbeitungsanlage 2 und Netz 8 miteinander verbindbar und/oder verbunden sind.

Fig. 3b zeigt ein Blockdiagramm eines alternativen Systems 3b, welches eine abgewandelte Ausführungsform von System 3a darstellt.

System 3b umfasst auch zumindest eine erfindungsgemäße Datenträgervorrichtung 1 (siehe Fig. 1), eine Datenverarbeitungsanlage 2 (siehe Fig. 2) und einen Server 4. Dabei sind Datenträgervorrichtung 1 und Datenverarbeitungsanlage 2 ebenfalls durch Verbindung 5 miteinander verbunden. Die dargestellte Verbindung 5 ist eine drahtgebundene Datenverbindung, z.B. sind Datenträgervorrichtung 1 und Datenverarbeitungsanlage 2 durch Einstecken von Datenschnittstelle 13 in Datenschnittstelle 23 verbunden. Des Weiteren ist Server 4 mit Netz 8 über Verbindung 7 verbunden, z.B. wie oben ausgeführt.

Im Gegensatz zu System 3a besteht eine Datenverbindung zwischen Datenträgervorrichtung 1 und Server 4 ohne Beteiligung von Datenverarbeitungsanlage 2. Datenträgervorrichtung 1 ist über Verbindung 9 mit Netz 8 verbunden. Die dargestellte Verbindung 9 ist eine Datenverbindung z.B. eine drahtlose Datenverbindung und besteht zwischen der optionalen Netzwerk- und/oder Mobilfunk-Datenschnittstelle 15 und dem Netz 8. Datenträgervorrichtung 1 und Server 4 sind folglich über Datenverbindung 7 und 9 sowie Netz 8 miteinander verbindbar und/oder verbunden. Vorzugsweise ist in diesem Fall keine Datenverbindung zwischen Datenträgervorrichtung 1 und Server 4 unter Beteiligung von Datenträgerverarbeitungsanlage 2 herstellbar.

Die in Fig. 3a und in Fig. 3b dargestellten Datenverbindungen sollen lediglich beispielhaft aufgefasst werden und können unabhängig von der jeweiligen Darstellung sowohl drahtlos als auch drahtgebunden ausgebildet sein. Server 4 ist in beiden Figuren beispielsweise der Server eines Dienstanbieters, z.B. der Server einer Bank, den diese Ihren Kunden zur Durchführung von Bankdiensten, wie z.B. Überweisungen, zur Verfügung stellt.

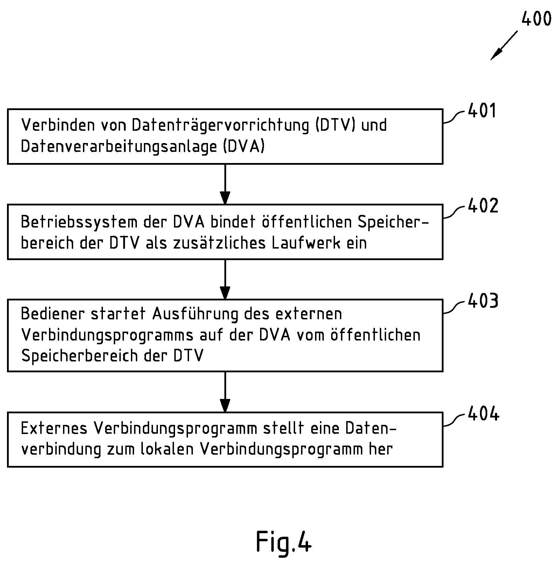

Fig. 4 zeigt ein beispielhaftes Ablaufdiagramm 400 mit Schritten, die durchgeführt werden, wenn Datenträgervorrichtung 1 mit einer Datenverarbeitungsanlage 2 (mechanisch) verbunden wird. Schritte in Ablaufdiagramm 400, die von einem Programm ausgeführt werden, sollen insbesondere so verstanden werden, dass das Programm entsprechende Programmanweisungen enthält, die einen Prozessor, auf dem das Programm ausgeführt wird, dazu veranlassen, einen entsprechenden Schritt auszuführen. Der Prozessor kann zur Ausführung eines Schrittes z.B. ein oder mehrere entsprechende Mittel (an)steuern.

In Schritt 401 erfolgt das mechanische Verbinden von Datenträgervorrichtung 1 (siehe Fig. 1) mit Datenverarbeitungsanlage 2 (siehe Fig. 2), indem der Benutzer beispielsweise Datenschnittstelle 13, welche z.B. als USB-Datenschnittstelle ausgebildet ist, in die dazu korrespondierende Datenschnittstelle 23 einsteckt. Sobald die Steckverbindung hergestellt ist, wird Datenträgervorrichtung z.B. über Datenschnittstelle 13 mit Energie versorgt und startet zunächst die Ausführung der Firmware auf Prozessor 10 und (z.B. anschließend) die Ausführung des lokalen Verbindungsprogramms und des Browserprogramms auf Prozessor 10.

Im Falle einer drahtlosen Datenschnittstelle ist z.B. denkbar, dass der Bediener die Datenträgervorrichtung 1 in die Nähe von Datenverarbeitungsanlage 2 bringt, z.B. in die Reichweite einer Funk-Datenschnittstelle von Datenverarbeitungsanlage 2.

In Schritt 402 erkennt das Betriebssystem von Datenverarbeitungsanlage 2, dass über Datenschnittstelle 23 eine Verbindung mit Datenträgervorrichtung 1 hergestellt wurde, stellt eine Datenverbindung zur Datenträgervorrichtung 1 her und bindet den öffentlichen Speicherbereich der Datenträgervorrichtung als neues Laufwerk in die Laufwerksstruktur von Datenverarbeitungsanlage 2 ein.

Ist Datenträgervorrichtung 1 beispielsweise als USB-Speicherstick ausgebildet, so kann die Einbindung des öffentlichen Speicherbereichs z.B. durch einen Treiber erfolgen, der standardmäßig vom Betriebssystem der Datenverarbeitungsanlage 2 vorgehalten wird und die im öffentlichen Speicherbereich enthaltenen Daten dem Betriebssystem verfügbar macht. Eine Installation eines Treibers auf der Datenverarbeitungsanlage 2 wäre in diesem Fall nicht notwendig, die Einbindung des öffentlichen Speicherbereichs würde installationslos erfolgen. Folglich wären auch alle ausführbaren Programme, die im öffentlichen Speicherbereich gespeichert sind, installationslos auf Prozessor 20 ausführbar.

Im Falle einer drahtlosen Datenschnittstelle erkennt das Betriebssystem der Datenverarbeitungsanlage 2, z.B. dass der Bediener Datenträgervorrichtung 1 in die Nähe von Datenverarbeitungsanlage 2 gebracht hat, stellt (gegebenenfalls nach einer entsprechenden Rückfrage beim Bediener der Datenträgervorrichtung und/oder Datenverarbeitungsanlage) eine Datenverbindung zur Datenträgervorrichtung 1 her und bindet den öffentlichen Speicherbereich der Datenträgervorrichtung als neues Laufwerk in die Laufwerksstruktur von Datenverarbeitungsanlage 2 ein.

In Schritt 403 startet der Bediener die Ausführung des externen Verbindungsprogramms, das z.B. als ausführbares Computerprogramm ausgebildet ist und sich auf dem neu eingebundenen Laufwerk befindet, auf Prozessor 20. Die Ausführung des externen Verbindungsprogramms kann aber z.B. auch automatisch vom Betriebssystem gestartet werden, z.B. sobald der öffentliche Speicherbereich als neues Laufwerk in die Laufwerkstruktur von Datenverarbeitungsanlage 2 eingebunden ist (z.B. über die Autorun-Funktionalität des Windows-Betriebssystems oder ähnlichen Funktionalitäten anderer Betriebssysteme).

In Schritt 404 stellt das externe Verbindungsprogramm eine verschlüsselte Datenverbindung zum auf Prozessor 10 ausgeführten lokalen Verbindungsprogramm her, über welche Datenträgervorrichtung 1 zumindest teilweise von Datenverarbeitungsanlage 2 fernsteuerbar ist.

Zum Beispiel ist das lokale Verbindungsprogramm als VNC-Server-Programm ausgebildet und das externe Verbindungsprogramm ist als VNC-Client-Programm ausgebildet. Sobald das VNC-Server-Programm auf der Datenträgervorrichtung und das VNC-Client-Programm auf der Datenverarbeitungsanlage ausgeführt werden, wird eine VNC-Datenverbindung zwischen den beiden Verbindungsprogrammen hergestellt. Eine solche VNC-Datenverbindung ermöglicht z.B. die Anzeige von (ggf. dynamischen) Bildschirmausgaben von auf der Datenträgervorrichtung ausgeführten Programmen (z.B. Bildschirmausgaben einer Benutzeroberfläche der Firmware o.ä.) auf der Datenverarbeitungsanlage und z.B. die Berücksichtigung von an der Datenverarbeitungsanlage aufgenommenen Tastatur- und/oder Mauseingaben als Bedienereingabe beim Ausführen von Programmen auf der Datenträgervorrichtung.

Zum Beispiel können bei der Ausführung eines Programms auf der Datenträgervorrichtung kontinuierlich Tastatur- und/oder Mauseingaben vom externen Verbindungsprogramm an das lokale Verbindungsprogramm als Bedienereingaben für das ausgeführte Programm und Ausgaben der Benutzeroberfläche des ausgeführten Programms vom lokalen Verbindungsprogramm an das externe Verbindungsprogramm weitergeleitet werden. Dadurch entsteht beim Bediener der Eindruck, dass das Programm auf Prozessor 20 (d.h. auf der Datenverarbeitungsanlage) ausgeführt wird, obwohl es tatsächlich auf Prozessor 10 (d.h. auf der Datenträgervorrichtung) ausgeführt wird.

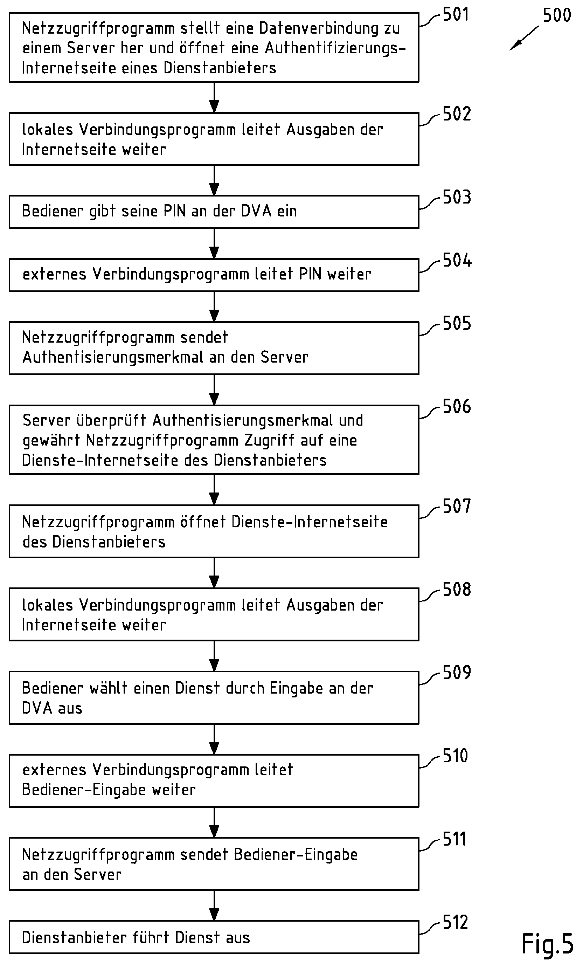

Fig. 5 zeigt ein beispielhaftes Ablaufdiagramm 500 mit Schritten, die durchgeführt werden, wenn die erfindungsgemäße Datenträgervorrichtung 1 (siehe Fig. 1) mit der Datenverarbeitungsanlage 2 (siehe Fig. 2) verbunden ist, d.h. dass z.B. alle Schritte in Ablaufdiagramm 400 bereits abgelaufen sind. Schritte in Ablaufdiagramm 500, die von einem Programm ausgeführt werden, sollen insbesondere so verstanden werden, dass das Programm entsprechende Programmanweisungen enthält, die einen Prozessor, auf dem das Programm ausgeführt wird, dazu veranlassen, einen entsprechenden Schritt auszuführen.

In Schritt 501 stellt das Browserprogramm eine Datenverbindung zu einem Internetserver eines Dienstanbieters her und öffnet eine Authentifizierungs-Internetseite des Dienstanbieters. Der Dienstanbieter ist z.B. eine Bank. Die Datenverbindung ist z.B. eine verschlüsselte HTTPS-Datenverbindung.

Die URL des Internetservers ist z.B. in der Konfigurationsdatei enthalten, so dass das Browserprogramm standardmäßig und/oder ausschließlich eine Datenverbindung zu dem Internetserver des Dienstanbieters herstellt. Außerdem kann die Konfigurationsdatei z.B. ein SSL-Serverzertifikat enthalten, um die Authentizität des Internetservers zu verifizieren.

Die Datenverbindung kann z.B. unter Beteiligung von Datenverarbeitungsanlage 2 zwischen Datenschnittstelle 13 und einer Datenschnittstelle des Internetservers über Datenverarbeitungsanlage 2 hergestellt werden. Dies entspricht System 3a. Es sind auch Varianten denkbar, in denen mehrere Datenverarbeitungsanlagen, Internetserver u.ä. (z.B. als Proxyserver, Protokollumsetzer, Gateway, Vermittlungsstation etc.) in die Datenverbindung zwischengeschaltet sind.

In Schritt 502 leitet das lokale Verbindungsprogramm Ausgaben der vom Browserprogramm geöffneten Authentifizierungs-Internetseite an das externe Verbindungsprogramm weiter. Ausgaben sind z.B. die (ggf. dynamischen) Bildschirmausgaben, so dass diese z.B. auf einer Anzeigeinheit (z.B. Ausgabegerät 25) von Datenverarbeitungsanlage 2 ausgegeben werden. Die angezeigte Authentifizierungs-Internetseite fordert den Benutzer z.B. zur Eingabe seiner PIN oder eines Authentisierungsmerkmals auf, um sich gegenüber dem Dienstanbieter zu authentisieren. Die Weiterleitung von Ausgaben der Internetseite kann z.B. kontinuierlich erfolgen. Es kann sich dabei z.B. auch bzw. zusätzlich um Tonausgaben o.ä. handeln.

In Schritt 503 gibt der Bediener seine PIN auf der Tastatur (z.B. Eingabegerät 24) von Datenverarbeitungsanlage 2 ein; und in Schritt 504 leitet das externe Verbindungsprogramm die eingegebene PIN an das lokale Verbindungsprogramm weiter, welches die eingegebene PIN z.B. als entsprechende Eingabe an das Browserprogramm übergibt. Die Weiterleitung von Bedienereingaben kann z.B. kontinuierlich erfolgen. Es sind allerdings auch Varianten denkbar, in denen die Datenträgervorrichtung 1 über eigene Eingabegeräte zur Eingabe der PIN verfügt (z.B. eine numerische Tastatur), dann kann die PIN auch nicht ausgespäht werden von Schadsoftware auf der Datenverarbeitungsanlage 2.

Zum Beispiel gibt die Datenträgervorrichtung 1 die eingegeben PIN z.B. an die Smartcard aus, welche das Authentisierungsmerkmal zum Auslesen durch Prozessor 10 freischaltet, z.B. wenn die eingegebene PIN die dem Authentisierungsmerkmal zugeordnete PIN ist. Anschließende wird das Authentisierungsmerkmal z.B. von Prozessor 10 ausgelesen.

In Schritt 505 sendet das Browserprogramm zumindest das Authentisierungsmerkmal 14 an den Internetserver des Dienstanbieters.

In Schritt 506 überprüft der Internetserver das Authentisierungsmerkmal 14 und gewährt dem Browserprogramm Zugriff auf eine Dienste-Internetseite des Dienstanbieters, falls das Authentisierungsmerkmal 14 den Bediener als berechtigt authentifiziert (2-Faktor-Authentifizierung).

In Schritt 507 öffnet das Browserprogramm die Dienste-Internetseite des Dienstanbieters; und in Schritt 508 leitet das lokale Verbindungsprogramm Ausgaben der Internetseite an das externe Verbindungsprogramm weiter, so dass z.B. die Bildschirmausgaben der Internetseite auf einer Anzeigeinheit (z.B. Ausgabegerät 25) von Datenverarbeitungsanlage 2 angezeigt werden. Die angezeigte Dienste-Internseite fordert den Benutzer zur Auswahl eines bestimmten vom Dienstanbieter angebotenen Dienstes aus. Dies können z.B. Bankdienste sein, wie z.B. Online-Überweisungen o.ä.

In Schritt 509 wählt der Bediener einen der angebotenen Dienste durch eine Eingabe an Eingabegerät 24 aus, z.B. durch eine Maus und/oder Tastatureingabe; und in Schritt 510 leitet das externe Verbindungsprogramm die Bedienereingabe an das lokale Verbindungsprogramm weiter, welches diese als entsprechende Bediener-Eingabe an das Browserprogramm übergibt.

In Schritt 511 sendet das Browserprogramm die Bedienereingabe an den Internetserver des Dienstanbieters.

Es ist beispielsweise denkbar, dass weitere Bedienereingaben für die Ausführung eines Dienstes durch den Dienstanbieter notwendig sind. Zum Beispiel kann ein Bediener zunächst den Dienst "Online-Überweisung" auswählen und wird anschließend auf einer weiteren Internetseite aufgefordert die notwendigen Informationen zur Ausführung der "Online-Überweisung" einzugeben, wie z.B. die Bankverbindung des Empfängers und den zu überweisenden Betrag.

In Schritt 512 führt der Dienstanbieter den ausgewählten Dienst entsprechend der Bedienereingabe aus.

Der Bediener kann z.B. vor der Ausführung eines Dienstes durch den Dienstanbieter erneut dazu aufgefordert werden, sich zu authentisieren, z.B. durch die Eingabe eines Einmal-Passwort (wie z.B. eine Transaktionsnummer (TAN) für Online-Überweisungen.

Nach der Ausführung des Dienstes durch den Dienstanbieter kann der Bediener das Browserprogramm z.B. beenden oder einen weiteren Dienst durch eine entsprechende Bedienereingabe auswählen. Das Beenden des Browserprogramms erfolgt vorzugsweise durch eine entsprechende Bedienereingabe und/oder durch unterbrechen der (mechanischen) Verbindung zwischen Datenträgervorrichtung und Datenverarbeitungsanlage (z.B. durch Ausstecken).

Das Browserprogramm wird auf Datenträgervorrichtung 1 in einer kontrollierten und, falls der Firmwarespeicherbereich ein NUR-Lese-Speicher ist, unveränderlichen, zumindest jedoch in einer gesicherten Umgebung ausgeführt; eine Manipulation des Browserprogramms (z.B. ein sogenannter "man-in-the-Browser") ist deshalb ausgeschlossen. Des Weiteren ist das Authentisierungsmerkmal 14 von Datenverarbeitungsanlage 2 nicht auslesbar und wird nur verschlüsselt an den Internetserver übertragen, so dass ein Missbrauch z.B. durch einen Hacker im Gegensatz zum Stand der Technik nur möglich ist, wenn dieser Datenträgervorrichtung 1 in unmittelbaren Besitz hat (weil ein Zugriff über Schadsoftware auf Datenverarbeitungsanlage 2 ausgeschlossen ist) und die zum Authentisierungsmerkmal 14 der Datenträgervorrichtung 1 gehörende PIN kennt.

Die Abfolge der einzelnen Verfahrenschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

Die in dieser Anmeldung beschriebenen beispielhaften Ausführungsformen der vorliegenden Erfindung sollen auch in allen Kombinationen miteinander offenbart sein.

## Patentansprüche

1. Verfahren, umfassend:
- Ausführen (500) eines auf einer tragbaren Datenträgervorrichtung (1) enthaltenen Netzzugriffprogramms auf einem Prozessor (10) der Datenträgervorrichtung (1), wobei das Netzzugriffprogramm insbesondere ein Browserprogramm, zur Herstellung einer Datenverbindung zu einem Netzwerkelement (4), insbesondere einem Internetserver eines Dienstanbieters, ist, wobei die tragbare Datenträgervorrichtung (1) ferner ein Authentisierungsmerkmal (14) umfasst, wobei der Zugriff auf das Authentisierungsmerkmal nur von Mitteln innerhalb der Datenträgervorrichtung (1) möglich ist, wobei die Berechtigung einer Person oder einer Gruppe von Personen, auf das Netzwerkelement zuzugreifen und/oder einen bestimmten Dienst eines Dienstanbieters in Anspruch zu nehmen, mit dem Authentisierungsmerkmal authentifizierbar ist und/oder das Netzzugriffprogramm beim Zugreifen auf das Netzwerkelement mit dem Authentisierungsmerkmal authentifizierbar ist, wobei das Authentisierungsmerkmal zur Authentisierung an das Netzwerkelement übertragen und von dem Netzwerkelement überprüft wird, und
- Verwenden von Mitteln einer mit der Datenträgervorrichtung (1) verbundenen Datenverarbeitungsanlage (2) zum Aufnehmen (24) und/oder Ausgeben (25) von Informationen beim Ausführen des Netzzugriffprogramms, wobei an der Datenverarbeitungsanlage (2) aufgenommene und die Ausführung des Netzzugriffsprogramms betreffende Tastatur- und/oder Mauseingaben über eine Datenverbindung zwischen der Datenträgervorrichtung (1) und der Datenverarbeitungsanlage (2) an der Datenträgervorrichtung (1) empfangen und Bildschirmausgaben betreffend die Ausführung des Netzzugriffsprogramms über die Datenverbindung an die Datenverarbeitungsanlage (2) zur Ausgabe auf einer dortigen Anzeigeeinheit (25) gesendet werden, und
- Verwenden eines Mittels, insbesondere einer Netzwerk- und/oder Mobilfunk-Datenschnittstelle, der Datenverarbeitungsanlage (26) zum Zugreifen auf das Netzwerkelement (4) beim Ausführen des Netzzugriffprogramms .

2. Tragbare Datenträgervorrichtung (1), umfassend:
- Mittel zum Ausführen (10) eines auf der Datenträgervorrichtung (1) enthaltenen Netzzugriffprogramms auf einem Prozessor (10) der Datenträgervorrichtung (1), wobei das Netzzugriffprogramm insbesondere ein Browserprogramm, zur Herstellung einer Datenverbindung zu einem Netzwerkelement (4), insbesondere einem Internetserver eines Dienstanbieters, ist und
- ein Authentisierungsmerkmal (14), wobei der Zugriff auf das Authentisierungsmerkmal nur von Mitteln innerhalb der Datenträgervorrichtung (1) möglich ist, wobei die Berechtigung einer Person oder einer Gruppe von Personen, auf das Netzwerkelement zuzugreifen und/oder einen bestimmten Dienst eines Dienstanbieters in Anspruch zu nehmen, mit dem Authentisierungsmerkmal authentifizierbar ist und/oder das Netzzugriffprogramm beim Zugreifen auf das Netzwerkelement mit dem Authentisierungsmerkmal authentifizierbar ist, wobei das Authentisierungsmerkmal zur Authentisierung an das Netzwerkelement übertragen und von dem Netzwerkelement überprüft wird, und
wobei die Datenträgervorrichtung (1) eingerichtet ist,
- beim Ausführen des Netzzugriffprogramms Mittel einer mit der Datenträgervorrichtung (1) verbundenen Datenverarbeitungsanlage (2) zum Aufnehmen (24) und/oder Ausgeben (25) von Informationen dergestalt zu verwenden, dass an der Datenverarbeitungsanlage (2) aufgenommene und die Ausführung des Netzzugriffsprogramms betreffende Tastatur- und/oder Mauseingaben über eine Datenverbindung zwischen der Datenträgervorrichtung (1) und der Datenverarbeitungsanlage (2) an der Datenträgervorrichtung (1) empfangen und Bildschirmausgaben betreffend die Ausführung des Netzzugriffsprogramms über die Datenverbindung an die Datenverarbeitungsanlage (2) zur Ausgabe auf einer dortigen Anzeigeeinheit (25) gesendet werden, und
- beim Ausführen des Netzzugriffprogramms Mittel, insbesondere eine Netzwerk- und/oder Mobilfunk-Datenschnittstelle, der Datenverarbeitungsanlage (26) zum Zugreifen auf das Netzwerkelement (4) zu verwenden.

3. Tragbare Datenträgervorrichtung (1) gemäß Anspruch 2, wobei das Authentisierungsmerkmal (14) eine digitale Signatur und/oder ein Zertifikat, insbesondere ein Softwarezertifikat und/oder ein RSA-Zertifikat, ist.

4. Tragbare Datenträgervorrichtung (1) gemäß einem der Ansprüche 2-3, wobei die Datenträgervorrichtung (1) ein lokales Verbindungsprogramm enthält, wobei das lokale Verbindungsprogramm auf einem Prozessor (10) der Datenträgervorrichtung (1) ausführbar ist und wobei eine Verbindung (5), insbesondere eine verschlüsselte Verbindung, herstellbar ist zwischen dem lokalen Verbindungsprogramm und einem auf einem Prozessor (20) der Datenverarbeitungsanlage (2) ausgeführten externen Verbindungsprogramm.

5. Tragbare Datenträgervorrichtung (1) gemäß Anspruch 4, wobei das lokale Verbindungsprogramm als Teil der Firmware der Datenträgervorrichtung (1) ausgebildet und im Firmwaredatenspeicherbereich der Datenträgervorrichtung (1) gespeichert ist, und wobei das externe Verbindungsprogramm in einem weiteren Speicherbereich der Datenträgervorrichtung (1) gespeichert ist und als neues Laufwerk in die Laufwerkstruktur der Datenverarbeitungsanlage (2) eingebunden wird, wenn die Datenträgervorrichtung (1) mit der Datenverarbeitungsanlage (2) verbunden ist oder wird.

6. Tragbare Datenträgervorrichtung (1) gemäß einem der Ansprüche 4-5, wobei das lokale Verbindungsprogramm als Konnektor-Programm ausgebildet ist, das von einem Prozessor der Datenträgervorrichtung ausgeführt wird und für die Weiterleitung der Netzwerk- und Grafik-Schnittstellen des Betriebssystems bzw. der Firmware der Datenträgervorrichtung (1) an die Datenverarbeitungsanlage (2) sorgt.

7. Tragbare Datenträgervorrichtung (1) gemäß einem der Ansprüche 4-6, wobei zur Herstellung einer Virtual -Network-Computing-(VNC)-Datenverbindung zwischen den beiden Verbindungsprogrammen das lokale Verbindungsprogramm als VNC-Server-Programm und das externe Verbindungsprogramm als VNC-Server-Programm ausgebildet ist, und wobei die VNC-Datenverbindung die Anzeige von Bildschirmausgaben von auf der Datenträgervorrichtung (1) ausgeführten Programmen auf der Datenverarbeitungsanlage (2) und die Berücksichtigung von an der Datenverarbeitungsanlage (2) aufgenommenen Bedienereingaben beim Ausführen von Programmen auf der Datenträgervorrichtung (1) ermöglicht.

8. Tragbare Datenträgervorrichtung (1) gemäß einem der Ansprüche 2-7, wobei das Netzzugriffprogramm gehärtet ist und/oder wobei die Datenträgervorrichtung (1) Konfigurationsinformationen enthält, die die Konfiguration des Netzzugriffprogramms beim Ausführen (500) des Netzzugriffprogramms vorgeben.

9. Tragbare Datenträgervorrichtung gemäß einem der Ansprüche 2-8, wobei die Datenträgervorrichtung (1) als USB-Speichergerät, insbesondere als USB-Speicherstick, ausgebildet ist.

10. Tragbare Datenträgervorrichtung (1) gemäß einem der Ansprüche 2-9, wobei das Netzzugriffprogramm in einem schreibgeschützten Speicherbereich, insbesondere einem Speicherbereich, der nach einmaliger Beschreibung mit Daten entweder nicht mehr oder nur im Falle einer erfolgreichen Authentifizierung beschreibbar ist, oder einem unveränderlichen Nur-Lese-Speicherbereich der Datenträgervorrichtung gespeichert ist.

11. Tragbare Datenträgervorrichtung (1) gemäß einem der Ansprüche 2-10, wobei Programmanweisungen des Netzzugriffprogramms den Prozessor zur Bereitstellung einer Benutzeroberfläche zum Zugriff auf das Netzwerkelement veranlassen, wenn das Netzzugriffprogramm durch den Prozessor ausgeführt wird.

12. Tragbare Datenträgervorrichtung (1) gemäß einem der Ansprüche 2-11, wobei die Datenverbindung zu dem Netzwerkelement (4) eine verschlüsselte Datenverbindung, insbesondere eine HTTPS- und/oder eine VPN-Datenverbindung, ist.

13. System (3a, 3b), umfassend:
- eine Datenträgervorrichtung (1) gemäß einem der Ansprüche 2-12; und
- eine mit der Datenträgervorrichtung (1) verbundene Datenverarbeitungsanlage (2).

14. Computerprogramm, umfassend Programmanweisungen, wobei die Programmanweisungen einen Prozessor zur Ausführung des Verfahrens nach Anspruch 1 veranlassen, wenn das Computerprogramm auf dem Prozessor ausgeführt wird.

## Claims

1. Method comprising:
- execution (500) of a network access program contained in a portable data carrier device (1) on a processor (10) of the data carrier device (1), wherein the network access program , in particular a browser program, is for establishing a data connection to a network element (4), in particular to an Internet server of a service provider, wherein the portable data carrier device (1) further comprises an authentication feature (14), wherein access to the authentication feature is only possible from means inside the data carrier device (1), wherein authorisation of a person or a group of people to access the network element and/or use a specific service offered by a service provider is authenticable using the authentication feature and/or the network access program is authenticable using the authentication feature when accessing the network element, wherein the authentication feature is transferred to the network element for authentication purposes and checked by the network element, and
- use of means in a data processing system (2) connected to the data carrier device (1) for recording (24) and/or outputting (25) information when executing the network access program, wherein keyboard and/or mouse inputs recorded at the data processing system (2) and relating to the execution of the network access program are received at the data carrier device (1) via a data connection between the data carrier device (1) and the data processing system (2) and screen outputs relating to the execution of the network access program are sent to the data processing system (2) via the data connection for output on a display unit (25) there, and
- use of means, in particular of a network and/or cellular radio data interface, of the data processing system (26) to access the network element (4) when executing the network access program.

2. Portable data carrier device (1), comprising:
- means for executing (10) a network access program contained on the data carrier device (1) on a processor (10) of the data carrier device (1), wherein the network access program, in particular a browser program, is for establishing a data connection to a network element (4), in particular to an Internet server of a service provider, and
- an authentication feature (14), wherein access to the authentication feature is only possible from means inside the data carrier device (1), wherein authorisation of a person or a group of people to access the network element and/or use a specific service offered by a service provider is authenticable using the authentication feature and/or the network access program is authenticable using the authentication feature when accessing the network element, wherein the authentication feature is transferred to the network element for authentication purposes and checked by the network element, and wherein the data carrier device (1) is configured to,
- when executing the network access program, use means of a data processing system (2) connected to the data carrier device (1) for recording (24) and/or outputting (25) information in such a way that keyboard and/or mouse inputs recorded at the data processing system (2) and relating to the execution of the network access program are received at the data carrier device (1) via a data connection between the data carrier device (1) and the data processing system (2) and screen outputs relating to the execution of the network access program are sent to the data processing system (2) via the data connection for output on a display unit there (25), and,
- when executing the network access program, use means, in particular a network and/or cellular radio data interface, of the data processing system (26) to access the network element (4).

3. Portable data carrier device (1) according to claim 2, wherein the authentication feature (14) is a digital signature and/or a certificate, in particular a software certificate and/or an RSA certificate.

4. Portable data carrier device (1) according to any one of claims 2 to 3, wherein the data carrier device (1) contains a local connection program, wherein the local connection program is executable on a processor (10) of the data carrier device (1) and wherein a connection (5), in particular an encrypted connection, is establishable between the local connection program and an external connection program executed on a processor (20) of the data processing system (2).

5. Portable data carrier device (1) according to claim 4, wherein the local connection program is configured as part of the firmware of the data carrier device (1) and is stored in the firmware data storage area of the data carrier device (1) and wherein the external connection program is stored in a further storage area of the data carrier device (1) and is integrated into the drive structure of the data processing system (2) as a new drive if the data carrier device (1) is connected to the data processing system (2).

6. Portable data carrier device (1) according to any one of claims 4 to 5, wherein the local connection program is configured as a connector program, which is executed by a processor of the data carrier device and ensures the forwarding of the network and graphic interfaces of the operating system or the firmware of the data carrier device (1) to the data processing system (2).

7. Portable data carrier device (1) according to any one of claims 4 to 6, wherein the local connection program is configured as a Virtual Network Computing (VNC) server program and the external connection program as a VNC server program to establish a VNC data connection between both connection programs, and wherein the VNC data connection enables the display of screen outputs on the data processing system (2) by programs executed on the data carrier device (1) and the consideration of user inputs recorded on the data processing system (2) when executing programs on the data carrier device (1).

8. Portable data carrier device (1) according to any one of claims 2 to 7, wherein the network access program is hardened and/or wherein the data carrier device (1) contains configuration information, which define the configuration of the network access program when executing (500) the network access program.

9. Portable data carrier device according to any one of claims 2 to 8, wherein the data carrier device (1) is configured as a USB storage device, in particular as a USB memory stick.

10. Portable data carrier device (1) according to any one claims 2 to 9, wherein the network access program is stored in a write-protected storage area, in particular a storage area, which, after one-time writing data therein, is either no longer writeable or only in the case of successful authentication, or in an unmodifiable read-only storage area of the data carrier device.

11. Portable data carrier device (1) according to any one of claims 2 to 10, wherein program instructions of the network access program cause the processor to provide a user interface for accessing the network element if the network access program is executed by the processor.

12. Portable data carrier device (1) according to any one of claims 2 to 11, wherein the data connection to the network element (4) is an encrypted data connection, in particular an HTTPS and/or a VPN data connection.

13. System (3a, 3b) comprising:
- a data carrier device (1) according to any one of claims 2 to 12; and
- a data processing system (2) connected to the data carrier device (1).

14. Computer program, comprising program instructions, wherein the program instructions cause a processor to execute the method according to claim 1 if the computer program is executed on the processor.

## Revendications

1. Procédé consistant :
- à exécuter (500) un programme d'accès à un réseau contenu sur un dispositif de support de données portable (1), ladite exécution étant effectuée sur un processeur (10) du dispositif de support de données (1), où le programme d'accès à un réseau, en particulier un programme de navigation, sert à l'établissement d'une liaison de données avec un élément de réseau (4), en particulier avec un serveur Internet d'un fournisseur d'accès, où le dispositif de support de données portable (1) comprend en outre une caractéristique d'authentification (14), où l'accès à la caractéristique d'authentification est possible seulement par des moyens placés à l'intérieur du dispositif de support de données (1), où le droit d'une personne ou d'un groupe de personnes d'accéder à l'élément de réseau et/ou d'avoir recours à un service déterminé d'un fournisseur d'accès peut être authentifié avec la caractéristique d'authentification et/ou le programme d'accès à un réseau peut être authentifié avec la caractéristique d'authentification, lors de l'accès à l'élément de réseau, où la caractéristique d'authentification est transmise à l'élément de réseau, pour servir à l'authentification, et contrôlée par l'élément de réseau, et
- à utiliser des moyens d'une unité de traitement des données (2) connectée au dispositif de support de données (1), lesdits moyens servant à l'enregistrement (24) et/ou à la sortie (25) d'informations lors de l'exécution du programme d'accès à un réseau, où des entrées fournies par le clavier et/ou par la souris, enregistrées sur l'unité de traitement des données (2) et concernant l'exécution du programme d'accès à un réseau, sont reçues sur le dispositif de support de données (1), via une liaison de données établie entre le dispositif de support de données (1) et l'unité de traitement des données (2), et des sorties d'écran concernant l'exécution du programme d'accès à un réseau sont envoyées à l'unité de traitement des données (2), via la liaison de données, pour la sortie sur une unité de visualisation (25) se trouvant sur ladite unité de traitement de données, et
- à utiliser un moyen de l'unité de traitement des données (26), en particulier une interface de données de réseau et/ou de téléphonie mobile, servant à accéder à l'élément de réseau (4) lors de l'exécution du programme d'accès à un réseau.

2. Dispositif de support de données portable (1), comprenant :
- des moyens servant à l'exécution (10) d'un programme d'accès à un réseau contenu sur le dispositif de support de données (1), ladite exécution étant réalisée sur un processeur (10) du dispositif de support de données (1), où le programme d'accès à un réseau, en particulier un programme de navigation, sert à l'établissement d'une liaison de données avec un élément de réseau (4), en particulier avec un serveur Internet d'un fournisseur d'accès, et
- une caractéristique d'authentification (14), où l'accès à la caractéristique d'authentification est possible seulement par des moyens placés à l'intérieur du dispositif de support de données (1), où le droit d'une personne ou d'un groupe de personnes d'accéder à l'élément de réseau et/ou d'avoir recours à un service déterminé d'un fournisseur d'accès peut être authentifié avec la caractéristique d'authentification et/ou le programme d'accès à un réseau peut être authentifié avec la caractéristique d'authentification, lors de l'accès à l'élément de réseau, où la caractéristique d'authentification est transmise à l'élément de réseau, pour servir à l'authentification, et contrôlée par l'élément de réseau, et
où le dispositif de support de données (1) est installé
- en comprenant des moyens d'une unité de traitement des données (2) connectée au dispositif de support de données (1), lesdits moyens servant à l'enregistrement (24) et/ou à la sortie (25) d'informations lors de l'exécution du programme d'accès à un réseau, de manière telle que des entrées fournies par le clavier et/ou par la souris, enregistrées sur l'unité de traitement des données (2) et concernant l'exécution du programme d'accès à un réseau, soient reçues sur le dispositif de support de données (1), via une liaison de données entre le dispositif de support de données (1) et l'unité de traitement des données (2), et que des sorties d'écran concernant l'exécution du programme d'accès à un réseau soient envoyées à l'unité de traitement des données (2), via la liaison de données, pour la sortie sur une unité de visualisation (25) se trouvant sur ladite unité de traitement des données, et
- en comprenant un moyen de l'unité de traitement des données (26), en particulier une interface de données de réseau et/ou de téléphonie mobile, à utiliser pour accéder à l'élément de réseau (4) lors de l'exécution du programme d'accès à un réseau.

3. Dispositif de support de données portable (1) selon la revendication 2, où la caractéristique d'authentification (14) est une signature numérique et/ou un certificat, en particulier un certificat de logiciel et/ou un certificat RSA.

4. Dispositif de support de données portable (1) selon l'une des revendications 2 à 3, où le dispositif de support de données (1) comprend un programme de liaison locale, où le programme de liaison locale peut être exécuté sur un processeur (10) du dispositif de support de données (1), et où une liaison (5), en particulier une liaison codée, peut être établie entre le programme de liaison locale et un programme de liaison externe exécuté sur un processeur (20) de l'unité de traitement des données (2).

5. Dispositif de support de données portable (1) selon la revendication 4, où le programme de liaison locale est conçu comme faisant partie du microprogramme du dispositif de support de données (1) et stocké dans la zone de mémoire de données du microprogramme du dispositif de support de données (1), et où le programme de liaison externe est stocké dans une autre zone de mémoire du dispositif de support de données (1) et est intégré comme nouveau mécanisme d'entraînement dans la structure d'entraînement de l'unité de traitement des données (2), quand le dispositif de support de données (1) est connecté à l'unité de traitement des données (2).

6. Dispositif de support de données portable (1) selon l'une des revendications 4 à 5, où le programme de liaison locale est conçu comme un programme de renvoi multiple qui est exécuté par un processeur du dispositif de support de données et fournit, à l'unité de traitement des données (2), la continuité de transmission des interfaces de réseau et de graphique du système de fonctionnement ou du microprogramme du dispositif de support de données (1).

7. Dispositif de support de données portable (1) selon l'une quelconque des revendications 4 à 6 où, pour l'établissement d'une liaison de données d'informatique virtuelle en réseau - VNC - entre les deux programmes de liaison, le programme de liaison locale est conçu comme un programme serveur VNC et le programme de liaison externe est conçu comme un programme serveur VNC, et où la liaison de données VNC rend possible la visualisation, sur l'unité de traitement des données (2), de sorties d'écran de programmes exécutés sur le dispositif de support de données (1), et rend possible la prise en compte d'entrées d'utilisateur enregistrées sur l'unité de traitement des données (2), lors de l'exécution de programmes sur le dispositif de support de données (1).

8. Dispositif de support de données portable (1) selon l'une quelconque des revendications 2 à 7, où le programme d'accès à un réseau est durci et/ou le dispositif de support de données (1) contient des informations de configuration qui prédéfinissent la configuration du programme d'accès à un réseau, lors de l'exécution (500) du programme d'accès à un réseau.

9. Dispositif de support de données portable selon l'une quelconque des revendications 2 à 8, où le dispositif de support de données (1) est conçu comme une unité de mémoire USB, en particulier comme un clé de mémoire USB.

10. Dispositif de support de données portable (1) selon l'une quelconque des revendications 2 à 9, où le programme d'accès à un réseau est stocké dans une zone de mémoire protégée en écriture, en particulier dans une zone de mémoire qui, après une description unique avec des données, soit n'est plus descriptible, soit est descriptible seulement dans le cas d'une authentification réussie, ou bien ledit programme d'accès à un réseau est stocké dans une zone de mémoire morte invariable du dispositif de support de données.

11. Dispositif de support de données portable (1) selon l'une quelconque des revendications 2 à 10, où des instructions de programme du programme d'accès à un réseau quittent le processeur pour la prise en charge d'une surface utilisateur servant à l'accès à l'élément de réseau, quand le programme d'accès à un réseau est exécuté par le processeur.

12. Dispositif de support de données portable (1) selon l'une quelconque des revendications 2 à 11, où la liaison de données avec l'élément de réseau (4) est une liaison de données codée, en particulier une liaison de données HTTPS et/ou de réseau privé virtuel - VPN.

13. Système (3a, 3b) comprenant :
- un dispositif de support de données (1) selon l'une quelconque des revendications 2 à 12 ; et
- une unité de traitement des données (2) connectée au dispositif de support de données (1).

14. Programme informatique comprenant des instructions de programme, où les instructions de programme quittent un processeur servant à la réalisation du procédé selon la revendication 1, quand le programme informatique est exécuté sur le processeur.
